# EUROPÄISCHE PATENTSCHRIFT

(11) **EP 3 278 669 B1**
(45) Veröffentlichungstag und Bekanntmachung des Hinweises auf die Patenterteilung: **10.06.2020**
(21) Anmeldenummer: 16001743.0
(22) Anmeldetag: 05.08.2016
(51) Int. Cl.: A21D 13/24, A23G 3/54

(54) **VERFAHREN ZUR HERSTELLUNG EINER BACKWARE UND BACKWARE**
METHOD FOR PREPARING A BAKED PRODUCT AND BAKED PRODUCT
PROCEDE DE FABRICATION D'UN PRODUIT CUIT ET PRODUIT CUIT

(43) Veröffentlichungstag der Anmeldung: 07.02.2018
(73) Patentinhaber: Griesson - de Beukelaer GmbH & Co. KG, 56751 Polch (DE)
(72) Erfinder: Schnell, Anja, 56751 Polch (DE); Lenarz, Matthias, 56751 Polch (DE); Zydek, Wolfgang, 56626 Andernach (DE); Fabian, Jürgen, 48599 Gronau (DE); Hajji, Fuad, 56070 Koblenz (DE)
(74) Vertreter: Bittner, Bernhard

(56) Entgegenhaltungen:
- EP-A1- 0 931 462
- EP-A1- 3 009 001
- GB-A- 586 375
- JP-A- 2013 000 017

## Beschreibung

Die Erfindung betrifft ein Verfahren zur Herstellung einer Backware aus mindestens einem Gebäck und mindestens einem Aufsatz aus zumindest einer flüssigkeitshaltigen Kernmasse mit zumindest einer für die Flüssigkeit undurchlässigen Umhüllung. Weiterhin betrifft die Erfindung eine Backware mit mindestens einem Gebäck und mindestens einem mit dem mindestens einen Gebäck verbundenen Aufsatz, wobei der mindestens eine Aufsatz mindestens eine flüssigkeitshaltige, bevorzugt gelartige, Kernmasse und eine für die Flüssigkeit der flüssigkeitshaltigen Kernmasse undurchlässiger, bevorzugt fettbasierte, Umhüllung für die flüssigkeitshaltige Kernmasse aufweist.

Flüssigkeitshaltige Füllungen mit Überzug auf der Basis einer hydrophoben Phase werden in vielen Bereichen bei der Herstellung von Süßwaren und Backwaren eingesetzt. In der Regel können Überziehungen von Füllungen mit Überzugsmasse im Hohlkörperverfahren, Wet-Shell Verfahren oder One-Shot-Verfahren durchgeführt werden. Die Verwendung flüssigkeitshaltiger Füllungen mit Überzug als Aufsatz für eine aus Aufsatz und Gebäck zusammengesetzte Backware stellt jedoch eine besondere Herausforderung dar, weil dabei zwei Komponenten mit sehr unterschiedlichen Eigenschaften dauerhaft verbunden werden müssen, ohne dass Aufsatz und/oder Gebäck dadurch in ihren, insbesondere den vom Konsumenten sensorisch erfassbaren, Eigenschaften verändert oder beschädigt werden. Eine übliche Verbindungsmethode liegt darin, die Kontaktflächen anzuschmelzen. Durch das unterschiedliche thermische Ausdehnungsverhalten von Gebäck, Füllung und Überzug besteht dabei aber die Gefahr, dass beim Erhitzen oder Abkühlen Spannungen auftreten, die insbesondere in dünnen Überzügen zu Rissen führen können. Andererseits sind aber gerade dünne Überzüge erwünscht, um einen möglichst großen Füllungsanteil zu erzielen, damit Geschmack und/oder Textur der Füllung gegenüber einem Überzug möglichst intensiv und dominant in der sensorischen Wahrnehmung der Konsumenten sind. Eine weitere Herausforderung stellt der bei üblichen Herstellungsverfahren unkontrollierte Flüssigkeitstransport zwischen einer flüssigkeitshaltigen Füllung und einem Gebäck dar, der zum Austrocknen der Füllung oder Durchweichen des Gebäcks führen kann. Eine Herausforderung besteht insbesondere darin, eine gelartige Füllung mit einer leichten, Mousse-artigen Konsistenz bzw. Textur mittels eines Verfahrens der One-Shot-Technologie mit einer Umhüllung zu umgeben, die zu einem stabilen Produkt führt, und Kontrolle über den Flüssigkeitsaustausch erlaubt.

Die Stabilität und insbesondere optische und/oder geschmackliche Attraktivität eines Gebäcks wird insbesondere durch Fettreifbildung auf der Oberfläche der Umhüllung, insbesondere auf Umhüllung aus Schokolade, reduziert. Ursache für Fettreifbildung ist zumeist, dass Öle und Fette aus dem Gebäck und/oder der Füllung durch eine Umhüllung beispielsweise aus Schokolade diffundieren an deren Oberfläche und rekristallisieren, wobei sich beispielsweise die energetisch günstigere Kristallform βVI bilden kann, welche jedoch eine vergleichsweise hohe Diffusionsrate von Flüssigkeiten durch die Umhüllung erlaubt. Die Fettreifbildung kann reduziert werden, indem zumindest die Oberfläche der Umhüllung behandelt wird. Eine solche Behandlung kann die Beschichtung der Umhüllung mit einer Schicht geringerer Diffusionsrate von Flüssigkeiten wie flüssigem Fett oder Wasser verglichen mit der Diffusionsrate der unbehandelten Umhüllung sein. Denkbar ist auch, die Umhüllung, beispielsweise die Fettkristalle in einer Umhüllung aus Schokolade, zu fragmentieren, so dass die darin befindlichen Einheiten wie zum Beispiel Fettkristalle in kleinere Einheiten fragmentiert werden und beim Erstarren eine dichtere Morphologie mit geringerer Diffusionsrate für Flüssigkeiten aufweisen. Als Verfahren für eine solche Fragmentierung des Ausgangsmaterials für eine Umhüllung und/oder eine Füllung wird insbesondere eine mechanische Scherung vorgesehen. Insbesondere sieht die Erfindung vor, dass die Scherung nicht vor dem sondern während des Injektionsprozesses vom Ausgangsmaterial der Füllung in das Ausgangsmaterial der Umhüllung stattfindet. Der Injektionsprozess kann insbesondere durch Einspritzung stattfinden. Die mechanische Scherung kann durch die Geometrie der Düse, beispielsweise eine hinreichend kleine Verengung oder Verscherungselemente wie Stäbe oder Gitter im Durchflusskanal der Düse bewirkt werden. Denkbar ist auch, dass der Düse eine Ultraschallquelle zur Beaufschlagung von Ausgangsmaterial mit Ultraschall zugeordnet ist. Gelartige Füllungen bzw. Kernmassen werden in der Regel biochemisch (z.B. enzymatisch, wie beispielsweise in der deutschen Patentschrift DE 10 2009 056738 B4 offenbart) in ihrer Viskosität reduziert, um das Mundgefühl Mousse-artiger zu machen. Eine Mousse-artige Füllung kann durch folgende Behandlungsarten erzielt werden: mechanische Scherung, welche zu einer Fragmentierung des Ausgangsmaterials führt, sodass im Falle der Umhüllung die erstarrte Umhüllung dichter gepackt ist als ohne diese Maßnahmen und somit die Diffusionsrate Flüssigkeit reduziert ist, oder sodass im Falle einer gelartigen Füllung mehr Fehlstellen im Gelnetzwerk oder vergleichbaren entstehen. Im Falle von gelartigen Füllungen kann der Eintrag einer Gasphase und/oder von Pflanzenfasern vorgesehen sein, was eine unvollständige gelartige Netzwerkstruktur in der Füllung bewirkt.

Ein weiterer Aspekt der Offenbarung bezieht sich daher auf eine Düse zur Einspritzung von Ausgangsmaterialien einer Umhüllung und/oder einer Füllung in einem One-Shot-Verfahren, welches ein mechanisches Mittel oder eine Ultraschallquelle zur Fragmentierung und insbesondere mechanischen Verscherung von Ausgangsmaterial während des Eindüsens umfasst.

Die Druckschriften EP 2468108 A1 und EP 1825760 beschreiben Verfahren zur Herstellung von Süßwaren mit einem One-Shot-Verfahren. Es wird aber keine Verbindung der hergestellten Süßwaren mit weiteren Komponenten zu einer Backware beschrieben.

Die Druckschrift DE 10 2009 056738 B4 beschreibt die Herstellung eines Lebensmittelprodukts, das eine Schokoladenhülle und eine Hydrokolloid-basierte Füllung umfasst. Auch hier ist keine Verbindung des hergestellten Lebensmittelprodukts mit weiteren Komponenten zu einer Backware beschrieben.

Die Druckschrift GB 586 375 A beschreibt ein Gebäck mit einem Aufsatz. Es ist jedoch keine kontrollierte Befeuchtung des Gebäcks durch die flüssigkeitshaltige Füllung des Aufsatzes beschrieben. Weitere zum Stand der Technik gehörende Druckschriften sind EP 3 009 001 A1, EP 0931 462 A1 und JP 2013 000017 A.

Der folgenden Erfindung liegt die Aufgabe zugrunde, eine Backware mit einem Gebäck und einem damit verbundenen Aufsatz, der eine flüssigkeitshaltige Kernmasse umfasst, und ein einfaches, reproduzierbares und effizientes Verfahren zur Herstellung einer solchen Backware zu schaffen, welche für den Konsumenten einen gefälligen Geschmack und ein saftiges Mundgefühl hervorruft und welche zugleich insbesondere gut handhabbar, lange haltbar und lagerbar ist.

Diese Aufgabe wird durch ein Verfahren gemäß den Merkmalen des Patentanspruches 1 und eine Backware gemäß Patentanspruch 12 gelöst. Vorteilhafte Ausgestaltungen der Erfindung sind Gegenstand der Unteransprüche und nebengeordneten Ansprüche.

Ein erfindungsgemäßes Verfahren zur Herstellung einer Backware aus mindestens einem Gebäck und mindestens einem Aufsatz aus zumindest einer flüssigkeitshaltigen Kernmasse mit zumindest einer für die Flüssigkeit undurchlässigen Umhüllung umfasst zumindest die folgenden Schritte:
a. Herstellen des mindestens einen Gebäcks;
b. Herstellen des mindestens einen Aufsatzes in einem One-Shot-Verfahren oder einem Triple-Shot-Verfahren, bei dem gleichzeitig die Rohstoffmischungen zwei verschiedener Kernmassen, welche ineinander angeordnet werden, in die Rohstoffmischung einer gemeinsamen Umhüllung injiziert werden, das zumindest die Injektion einer Rohstoffmischung der zumindest einen flüssigkeitshaltigen Kernmasse des Aufsatzes in eine Rohstoffmischung der zumindest einen Umhüllung des Aufsatzes umfasst, wobei die Umhüllung zumindest am Ende der Herstellung des Aufsatzes nicht fließfähig ist,
c. Ausgestalten von Durchbrechungen in der Kontaktfläche der Umhüllung zum Gebäck nach der Injektion einer Rohstoffmischung der zumindest einen flüssigkeitshaltigen Kernmasse des Aufsatzes in eine Rohstoffmischung der zumindest einen Umhüllung der Aufsatzes, und
d. Aufbringen des mindestens einen Aufsatzes auf das mindestens eine Gebäck, oder umgekehrt,
wobei der Aufsatz im Bereich seiner Kontaktfläche zum Gebäck daran haftfähig ist.

Ein Kerngedanke ist, zumindest eine flüssigkeitshaltige Kernmasse mit einer Umhüllung aus einer für die Flüssigkeit undurchlässigen Schicht zu umgeben. Ist die flüssigkeitshaltige Kernmasse beispielsweise eine gelartige Kernmasse und enthält Wasser, so bietet sich beispielsweise eine fettbasierte und damit im Wesentlichen wasserundurchlässige Umhüllung, beispielsweise aus Schokolade, an. Dadurch wird insbesondere der Stofftransport von Flüssigkeit aus der flüssigkeitshaltigen Kernmasse in eine Umgebung der Backware gehemmt oder sogar unterbunden, sodass die flüssigkeitshaltige Kernmasse zumindest auf einer für die Lagerung der Backware typischen Zeitspanne vor starken Änderungen der Produkteigenschaften geschützt wird. Weiterhin kann die Umhüllung als Sperrschicht gegen einen unkontrollierten Stofftransport zwischen der flüssigkeitshaltigen Kernmasse und dem Gebäck der Backware dienen. Vorteilhaft daran ist, dass die Produkteigenschaften von Kernmasse und Gebäck nicht durch das Eindringen von Stoffen aus der jeweils anderen Komponente verändert werden. Beispielsweise wird ein Gebäck davor geschützt, durch das Eindringen von Wasser aus einer wasserhaltigen Kernmasse durchweicht zu werden.

Das One-Shot-Verfahren ermöglicht die Erzeugung gefüllter Produkte aus einer Kernmasse und einer Umhüllung. Die beiden Komponenten liegen dabei im fließfähigen, also flüssigen oder zumindest zähflüssigen, jedenfalls nicht erstarrten, Zustand vor. Die Rohstoffmischungen der Umhüllung und der Kernmasse werden durch Düsen so in eine oben offene Form gedrückt, dass die Rohstoffmischung der Umhüllung eine geschlossene Hülle um die Kernmasse bildet. Vorteilhaft an diesem Verfahren ist, dass die Produktion schneller abläuft als bei anderen Verfahren, da das Erzeugnis in einem einzigen Arbeitsschritt hergestellt wird. Neben dem positiven zeitlichen Aspekt sind derartige Maschinen auch deutlich preiswerter als Maschinen anderer Verfahren. Das One-Shot-Verfahren weist allerdings einige spezifische Anforderungen auf: Das Verfahren erlaubt nur eine geringe Abweichung in den Eigenschaften der Rohstoffmischung der Kernmasse wie spezifisches Gewicht und Fließeigenschaften von denen der Rohstoffmischung der Umhüllung. Beispielsweise sollte die Viskosität der Rohstoffmischung der Kernmasse um nicht mehr als 50 % von der Viskosität der Rohstoffmischung der Umhüllung im Rahmen des One-Shot-Verfahrens abweichen. Zudem darf auch die Größe der festen Bestandteile der Kernmasse nur einen bestimmten Wert aufweisen, da ansonsten das One-Shot-Verfahren nicht durchführbar wäre. Weiterhin müssen die Temperaturen der Rohstoffmischungen von Umhüllung und Kernmasse aufeinander abgestimmt sein, um ein optimales Ergebnis bei der Herstellung zu erreichen.

Der Begriff "nicht fließfähig" bedeutet im Sinne der Erfindung beispielsweise, dass die Umhüllung unter für Backwaren üblichen Lagerbedingungen, insbesondere bei Temperaturen unter 25 °C, auf für die Lagerung von Gebäck üblichen Zeitskalen nicht zerfließt. Dadurch, dass die Umhüllung am Ende der Herstellung des Aufsatzes nicht fließfähig ist, wird erreicht, dass der Aufsatz auf einfache Weise auf dem Gebäck aufgebracht werden kann, ohne dabei oder während der weiteren Verarbeitung oder Lagerung die bei der Herstellung vorgegebene Form zu verlieren. Beim Aufbringen des mindestens einen Aufsatzes auf das mindestens eine Gebäck muss der Aufsatzes im Bereich seiner Kontaktfläche zum Gebäck daran haftfähig sein, um eine dauerhafte Verbindung von Aufsatz und Gebäck zu gewährleisten, die auch während der weiteren Verarbeitung oder im Transport nicht aufbricht. Die beiden in diesem Abschnitt genannten Verfahrens- und Produktmerkmale gewährleisten also, dass der Konsument ein ansehnliches Produkt erhält.

In einer Ausführungsform des erfindungsgemäßen Verfahrens kann das Herstellen des mindestens einen Aufsatzes einen oder mehrere der folgenden Schritte vor und/oder während der Injektion einer Rohstoffmischung der zumindest einen flüssigkeitshaltigen Kernmasse des Aufsatzes in eine Rohstoffmischung der zumindest einen Umhüllung des Aufsatzes umfassen:
a. Abmessen der Rohstoffe der Umhüllung;
b. Vermischen der Rohstoffe der Umhüllung zu einer Rohstoffmischung;
c. Erhitzen der Rohstoffmischung der Umhüllung;
d. Abmessen der Rohstoffe der Kernmasse;
e. Vermischen der Rohstoffe der Kernmasse zu einer Rohstoffmischung;
f. Erhitzen der Rohstoffmischung der Kernmasse;
g. Einstellen der Zusammensetzung und/oder der Eigenschaften der Rohstoffmischung der Umhüllung und/oder Kernmasse, wie insbesondere Trockenstoffgehalt und/oder pH-Wert, um das Produkt mikrobiologisch stabil zu machen und/oder die Bildung der gelartigen Netzwerkstrukturen zu ermöglichen;
h. Einstellen des pH-Wertes der Rohstoffmischung der Umhüllung und/oder der Kernmasse;
i. Abmessen und Beimischen von Hilfsstoffen, beispielsweise zur Ausbildung eines Gelnetzwerkes in die Rohstoffmischung der Umhüllung und/oder der Kernmasse, oder von Impfkristallen zur Reduzierung der Diffusionsrate von Flüssigkeiten durch eine rekristallisierte Umhüllung; insbesondere kann eine mechanische Behandlung (z.B. Scherung, Ultraschallbehandlung) der Kernmasse ausgeführt werden, um gelartige Netzwerkstrukturen in der Füllung zu fragmentieren, um so die Viskosität und/oder Festigkeit der Kernmasse zumindest zeitweise während des One-Shot-Verfahrens zu reduzieren;
j. Abkühlen der Rohstoffmischung der Umhüllung und/oder der Kernmasse auf eine erste Temperatur T1, wobei bevorzugt die ersten Temperatur T1 unterhalb einer Schertemperatur von gelösten Biopolymeren in der jeweiligen Rohstoffmischung liegt und/oder das Abkühlen nach oder vor dem Einstellen des pH-Wertes erfolgt, wobei das Abkühlen ein- oder mehrstufig sein kann, wobei das Abkühlen mit oder ohne Scherung erfolgt, und/oder wobei an dieser Stelle des Verfahrens die Eigenschaften der Rohstoffmischung (z.B. der pH-Wert) mittels Hilfsstoffen (z.B. Salz, Pflanzenfasern und/oder Impfkristallen, welche z.B. den Rekristallisierungsprozess beeinflussen) eingestellt werden, beispielsweise um eine Kernmasse wie eine gelartige Füllung mit einer leichten Mousse-artigen Konsistenz zu erzeugen, um die Gefahr von Fettreif auf einer Umhüllung wie z.B. einer Schokoladenoberfläche zu minimieren oder gar nicht erst entstehen zu lassen oder um durch die Temperaturführung und die Zusammensetzung der Rohstoffmischung der Umhüllung einen höheren und attraktiveren Produktglanz und eine bessere Ausformbarkeit der Oberfläche der Umhüllung zu erreichen, beispielsweise zur Erzielung eines höheren Detailgrades in der Oberfläche der Umhüllung (beispielsweise für Logos, Schriftzüge, Einprägungen),
k. Abkühlen der Rohstoffmischung der Umhüllung und/oder der Kernmasse auf eine zweiten Temperatur T2, wobei bevorzugt die zweite Temperatur T2 unterhalb einer Schertemperatur von gelösten Biopolymeren in der jeweiligen Rohstoffmischung liegt und/oder das Abkühlen nach dem Einstellen des pH-Wertes und/oder dem Beimischen der Hilfsstoffe erfolgt und/oder
l. Aufbrechen einer gelartigen Netzwerkstruktur durch mechanische Behandlung der Rohstoffmischung

Durch das Abmessen der Rohstoffe, insbesondere jedes Rohstoffs als Einzelzutat und/oder von Premixen, kann vorteilhafterweise die Zusammensetzung der jeweiligen Rohstoffmischung genau eingestellt werden, um die gewünschten Produkteigenschaften zu erreichen. Das Vermischen der Rohstoffe führt zu einer homogenen Verteilung der Rohstoffe in der jeweiligen Rohstoffmischung und somit zu einer gleichbleibenden Qualität zwischen den mit einer Rohstoffmischung hergestellten Produkten. Wenn eine Rohstoffmischung keine ausreichende Fließfähigkeit für das One-Shot-Verfahren aufweist, kann ihre Fließfähigkeit durch Erhitzen oder Zugabe eines Hilfsstoffs (z.B. Impfkristalle, Emulgatoren) angepasst werden.

Das Einstellen des Trockenstoffgehalts einer Rohstoffmischung geschieht beispielsweise durch Verdampfen oder Zugabe von Wasser, durch die Zugabe von Stückgut, das insbesondere als Obststückgut, kakaohaltiges Stückgut, nusshaltiges Stückgut, zuckerhaltiges Stückgut und/oder einer Mischung hieraus ausgewählt sein kann. Als Stückgut enthaltene Zutaten rufen ein anderes Geschmackserlebnis hervor als Zutaten die, beispielsweise innerhalb einer Kernmasse, homogen verteilt sind, sodass über das Einstellen des Trockenstoffgehalts eine große Produktvielfalt hergestellt werden kann. Weiterhin kann der Trockenstoffgehalt im Fall einer gelierfähigen Rohstoffmischung die Ausbildung eines Gelnetzwerkes beeinflussen und dadurch die Fließfähigkeit der Rohstoffmischung für das One-Shot-Verfahren optimieren und/oder das Mundgefühl beim Konsumenten der Backware positiv beeinflussen.

Für die Rohstoffmischung der Kernmasse ist Gelierfähigkeit, die beispielsweise durch in der Rohstoffmischung enthaltene Hydrokolloide wie Polysacharide oder Proteine, Flüssigkeit und/oder natürliche und/oder modifizierte Pflanzenfasen insbesondere als Einzelzutat erreicht wird, von Vorteil, da durch die Wasserbindung durch die Pflanzenfasern weniger Wasser für die Ausbildung von Gelbrücken zwischen Hydrokolloiden in der Füllung zur Verfügung steht, sodass die Füllung Mousse-artiger wird. Für die Rohstoffmischung der Kernmasse ist Gelierfähigkeit von Vorteil, um die Fließfähigkeit der Kernmasse durch Gelierung herabzusetzen. Dadurch wird ein unerwünschtes Auslaufen der Kernmasse im Produktionsprozess und auch später beim Konsum, wenn der Konsument die Backware beispielsweise anschneidet oder anbeißt, verhindert.

Das Einstellen des pH-Wertes einer Rohstoffmischung der Kernmasse kann beispielsweise durch die Zugabe einer Säure, insbesondere einer organischen Säure wie Zitronensäure, erfolgen. Ein saurer pH-Wert wirkt stark begünstigend auf die Gelierung und die Ausbildung eines dreidimensionalen Gelnetzwerks in einer gelierfähigen Rohstoffmischung. Durch die Einstellung des pH-Wertes können daher Ausmaß und Geschwindigkeit der Gelierung prozess- und produktoptimiert eingestellt werden. Die Verwendung von Zitronensäure ist vorteilhaft, da diese als Lebensmittelzusatz zugelassen und kostengünstig in ausreichender Reinheit erhältlich ist. Gerade aus geschmacklichen Gründen kommen auch andere Fruchtsäuren oder in anderen Lebensmitteln enthaltene Säuren wie Milchsäure in Betracht.

Das Beimischen von Hilfsstoffen (z.B. Salze, Säure) zur Ausbildung eines Gelnetzwerkes in eine gelierfähige Rohstoffmischung erlaubt es, die Eigenschaften, die sich durch die Gelierung ergeben, den Prozess- oder Konsumentenanforderungen entsprechend einzustellen. So kann beispielsweise durch das Beimischen von natürlichen oder modifizierten Pflanzenfasern, insbesondere als Einzelzutat und/oder mit voreingestelltem Hydratisierungsgrad, ein durchbrochenes Gelnetzwerk erzeugt werden, in dem sich also weniger kovalent und/oder nicht-kovalente Bindungen ("Gelbrücken") ausbilden als ohne Zugabe der Pflanzenfasen, so dass eine weniger feste Struktur des Produkts entsteht als durch ein vollständig ausgebildetes Gelnetzwerk. Ein Hauptmechanismus dieses Effektes ist, dass die noch nicht mit Flüssigkeit gesättigten Gelbildner wie Hydrokolloide und die Pflanzenfasern um die freie Flüssigkeit konkurrieren und sich beispielsweise abhängig vom jeweiligen Vorhydratisierungsgrad unterschiedliche Gelbrückendichten ergeben. Auf diese Weise kann beim Verzehr anstelle eines unerwünschten gummiartigen Bisses ein angenehmes, mousseartiges Mundgefühl hervorgerufen werden.

Für das One-Shot-Verfahren ist der Grad der Fließfähigkeit der verwendeten Rohstoffmischungen von entscheidender Bedeutung. Um die in der Regel temperaturabhängige Fließfähigkeit optimal einzustellen, können erfindungsgemäß mehrere Abkühlschritte mit unterschiedlichen Zieltemperaturen, und insbesondere auch unterschiedlichen Abkühlgeschwindigkeiten, erforderlich sein. Bei gelierfähigen Rohstoffmischungen hängt die Ausbildung eines Gelnetzwerkes wesentlich vom Zusammenspiel von pH-Wert, Temperatur, der Anwesenheit von Hilfsstoffen und der physikochemischen Eigenschaften der Hydrokolloide ab. Daher können erfindungsgemäß durch bezüglich ihrer Zieltemperatur und/oder ihrer Abkühlgeschwindigkeit verschiedene Abkühlschritte und insbesondere auch durch verschiedene Reihenfolgen zwischen pH-Wert-Einstellung, Hilfsstoffbeimischung und/oder Abkühlschritten unterschiedlich ausgebildete gelartige Netzwerkstrukturen erreicht werden, um für das One-Shot-Verfahren und für den Konsumenten optimale rheologische und sensorische Produkteigenschaften zu erreichen.

Die Ausbildung eines gelartigen Netzwerkestruktur in einer Rohstoffmischung kann gegebenenfalls durch mechanische Behandlung, bevorzugt Scherung der Rohstoffmischung, beispielsweise durch Rühren oder Transport der Rohstoffmischung durch enge Rohre, aufgebrochen werden, und zwar sowohl vollständig als auch teilweise. Nach der Scherung eines gelartigen Produktes, kann die gelartige Struktur neu ausgebildet werden, abhängig den Eigenschaften des Hydrokolloids, der Temperatur und weiteren Rohstoffen in der Rohstoffmischung. In der Regel erniedrigt die mechanische Behandlung die Viskosität, sodass die Viskosität durch Scherung ohne Temperaturänderungen auf einen für das One-Shot-Verfahren geeigneten Wert eingestellt werden kann. Die Regulierung der Geliergeschwindikeit kann durch die Hinzugabe von Hilfsstoffen wie Puffersalz erzielt werden. Der Verzicht auf Temperaturänderungen, insbesondere auf Temperaturerhöhungen zur Verringerung der Viskosität, ist vorteilhaft, weil zu hohe Temperaturdifferenzen zwischen Umhüllung, Kernmasse, Gießform und Gebäck aufgrund der unterschiedlichen Wärmeausdehnungen beim Temperieren auf gleiche Temperatur Spannungen verursachen, die zu Rissbildung in der Umhüllung führen können. Weiterhin können durch zu hohe Temperaturen Geschmack, Aussehen, Konsistenz und/oder Nährwert einer Rohstoffmischung verschlechtern. Ein weiterer positiver Effekt der Scherung ist, dass sich die Konsistenz des aus der Rohstoffmischung hergestellten Produkts einstellen lässt. Dadurch, dass ein Teil der kovalenten und/oder nicht-kovalenten Bindungen des gelartigen Netzwerkes gelöst werden, erhält die gelartige Füllung eine weniger feste Konsistenz, wodurch beim Verzehr ein angenehmeres weiches und saftiges Mundgefühl ausgelöst wird.

Es ist besonders vorteilhaft, wenn das gelartige Netzwerk in der Füllung unter Verwendung eines bestimmten Hydrokolloids scherreversibel ist, das heißt sich nach der Scherung im Wesentlichen erneut in eine gelartige Struktur übergeht, mit einer sehr festen bis zu einer weichen Textur. Dadurch wird insbesondere auch ein bereits ausgebildetes Gel pumpbar, denn durch die mechanische Krafteinwirkung einer Pumpe werden Gelbrücken aufgebrochen, sodass das Gel fließfähig wird. Ist das Gel scherreversibel, bildet sich nach dem Pumpvorgang das Gelnetzwerk wieder aus, sodass das Gel die gewünschte Zielkonsistenz erhält. Weiterhin kann es im Produktionsprozess, beispielsweise bei einer Produktionsunterbrechung, geschehen, dass eine Rohstoffmischung durch Gelierung zu viskos zur Weiterverarbeitung, beispielsweise für das Einfüllen in eine Gießform im One-Shot-Verfahren, wird. Durch Scherung, beispielsweise durch mechanisches Rühren der Rohstoffmischung, kann das Gelnetzwerk teilweise wieder aufgebrochen werden, sodass die Viskosität angepasst wird. Ist die Rohstoffmischung scherreversibel, kann die Gelierung danach wieder fortschreiten, sodass der gewünschte Gelierungsgrad des Produktes erreicht wird.

Geeignete Hydrokolloide zur Erzeugung scherreversible Gele sind beispielsweise die verschiedenen Carrageene wie Kappa-Carrageen, lota-Carrageen und Lamda-Carrageen und Mischungen davon, Mischungen von Carrageenen und Johannisbrotkernmehl, Furcellaran und Gellan. Gellan ist deswegen geeignet, weil es ein sprödes Gel ist, eine glatte Geschmacksfreisetzung zeigt und stabil über einen breiten pH-Bereich ist, wogegen Carrageen wegen seiner kaubaren Geltextur und sehr raschen Erstarrungseigenschaften vorteilhaft ist. Die Viskosität von Carrageen kann zudem über einen weiten Bereich durch Einstellung der Temperatur eingestellt werden. Die hier beispielhaft genannten Hydrokolloide sind wärmedispergierbar und führen zu Gelen, die pumpbar und/oder scherreversibel sind. Die Gele erstarren sofort bzw. gelieren beispielsweise innerhalb von ca. 20 Minuten unterhalb 80°C, und können eine Textur von einem sehr festen Gel bis zu einem weichen ausbreitbaren Gel liefern, geeignet zum Formen, Überziehen oder als Zusatz zu einer erfindungsgemäßen Rohstoffmischung. Geeignete kationenreaktive und thermohärtbare Hydrokolloide können verwendet werden. Die Textur des Gels kann beispielsweise durch Einstellen der Konzentration des Hydrokolloids bezogen auf die Flüssigkeit, die Wahl des Hydrokolloids, durch Selektion der geeigneten individuellen Mischungen von Hydrokolloiden, durch das Verändern der Konzentration eines Kationen-haltigen essbaren Materials, durch Verwendung von einem oder mehr Kationen in der Rohstoffmischung, durch Einstellen des pH-Werts der Rohstoffmischung und/oder durch Zugabe von Pflanzenfasern, insbesondere modifiziert und/oder als Einzelzutat, angepasst werden.

In einer Ausführungsart des erfindungsgemäßen Verfahrens kann die Herstellung des mindestens einen Aufsatzes nach der Injektion einer Rohstoffmischung der zumindest einen flüssigkeitshaltigen Kernmasse des Aufsatzes in eine Rohstoffmischung der zumindest einen Umhüllung des Aufsatzes ein kontrolliertes Abkühlen von Schokolade oder Fettglasurmasse der Umhüllung und/oder der Kernmasse auf eine Umgebungstemperatur, also je nach Prozess beispielsweise etwa 8 °C, 20 °C oder 25 °C, umfassen.

Das ein- oder mehrstufiges Abkühlen auf eine Umgebungstemperatur bereitet eine Rohstoffmischung für die weitere Verarbeitung bei dieser Temperatur vor. Ein kontrolliertes Abkühlen ist von Vorteil, da dadurch in der Schokolade oder Fettglasurmasse der Umhüllung die gewünschte Kristallisationsform erzielt wird und Spannungen, die zwischen Komponenten mit unterschiedlichem thermischem Kontraktionsverhalten auftreten können, reduziert oder gar vermieden werden können. Es kann daher die Abkühlzeit von einer Prozesstemperatur auf die Umgebungstemperatur beispielsweise anhand der Differenz der thermischen Kontraktionskoeffizienten der Komponenten des Aufsatzes festgelegt werden. Dabei erfordert eine große Differenz in Stoffmenge und/oder Temperatur im Allgemeinen eine lange Abkühlzeit. Auf diese Weise kann insbesondere die Gefahr von unerwünschter Fettreif- und/oder Rissbildungen in der zumindest einen Umhüllung eines Aufsatzes verringert oder vollständig ausgeschlossen werden.

Durchbrechungen in der Kontaktfläche der Umhüllung zum Gebäck können beispielsweise durch herausragende Strukturen in einer Gießform für die Herstellung des Aufsatzes oder nachträglich durch Perforieren der Kontaktfläche der Umhüllung, beispielweise über einen höhenverstellbaren Stempel mit herausragenden Strukturen erzeugt werden. Dabei ist es insbesondere vorteilhaft, wenn sich die Kontaktfläche im zumindest teilweise geschmolzenen Zustand befindet, weil so verhindert werden kann, dass sich über die Durchbrechungen hinausgehende Risse in der Umhüllung ausbilden. Durch die erzeugten Durchbrechungen und ihre Abmessungen und Anordnung kann in einer erfindungsgemäß hergestellten Backware der Stofftransport zwischen der flüssigkeitshaltigen Kernmasse des zumindest einen Aufsatzes und dem zumindest einen Gebäck eingestellt werden. So kann ein Stofftransport insbesondere von Flüssigkeit aus der Kernmasse in das Gebäck erfolgen. Vorteilhafterweise kann sich so ein Gleichgewicht eines Stoffstroms von Flüssigkeit aus dem Gebäck in eine Umgebung der Backware und eines Stoffstroms von Flüssigkeit aus der flüssigkeitshaltigen Kernmasse durch die Durchbrechungen in das Gebäck einstellen, so dass zumindest ein innerer Bereich des Gebäcks einen konstanten Flüssigkeitsgehalt beibehält. Zumindest solange nichtgebundene Flüssigkeit in der flüssigkeitshaltigen Kernmasse vorliegt, können so die flüssigkeitsabhängigen Eigenschaften des Gebäcks erhalten und insbesondere ein unerwünschtes Austrocknen verhindert werden. Vorzugsweise fungiert eine vollständige Umhüllung ohne Durchbrechungen an der Kontaktfläche zwischen zwei Komponenten als Sperrschicht und verhindert oder erschwert den unkontrollierten Stofftransport. Vor oder hinter der Sperrschicht können (weitere) Diffusionsbarrieren beispielsweise durch Aufbringen einer Beschichtung erzeugt werden. Der Vorteil hierbei besteht darin, die Füllungseigenschaften weitestgehend im Rahmen der Mindesthaltbarkeit zu erhalten.

In einer Ausführungsart des erfindungsgemäßen Verfahrens kann bei der Injektion der Rohstoffmischung der zumindest einen flüssigkeitshaltigen Kernmasse in die Rohstoffmischung der zumindest einen Umhüllung die Viskosität der Rohstoffmischung der Umhüllung 1 - 50 Pas, bevorzugt 5 - 30, weiter bevorzugt 10 - 20 betragen. In diesem Viskositätsbereich lässt sich die Gießform, in der der Aufsatz hergestellt wird, besonders kontrolliert und gleichmäßig mit der Rohstoffmischung auskleiden, wodurch eine gut einstellbare und gleichmäßige Umhüllungsdicke entsteht, die für eine ansehnliche Backware vorteilhaft ist. Weiterhin kann die Temperatur der Rohstoffmischung der flüssigkeitshaltigen Kernmasse in einem Bereich von ± 3 °C, bevorzugt ± 2 °C, weiter bevorzugt ± 1 °C, um die Gießtemperatur der Rohstoffmischung der Umhüllung liegen. Ähnliche Temperaturen verringern durch Temperaturunterschiede bedingte Spannungen und damit die Gefahr von Rissbildungen in der Umhüllung, als auch die Entstehung von Fettreif auf der Oberfläche der Umhüllung. Wird die Umhüllung beispielsweise aus Schokolade hergestellt, so liegt die Gießtemperatur ihrer Rohstoffmischung bei (28,5 ± 3) °C. Außerdem kann die Viskosität der Rohstoffmischung der flüssigkeitshaltigen Kernmasse einen Wert maximal 50 % höher oder geringer, bevorzugt 10-40 % höher oder geringer, als die Viskosität der Rohstoffmischung der Umhüllung haben. Ähnliche Viskositäten vereinfachen die Steuerung der gleichzeitigen Einfüllung der Rohstoffmischungen von Kernmasse und Umhüllung. Die in diesem Absatz genannten Parameter können mit Verfahrensschritten wie beschrieben auf die hier genannten Werte eingestellt werden.

In einer Ausführungsart des erfindungsgemäßen Verfahrens kann das Herstellen des mindestens einen Aufsatzes und das Aufbringen des mindestens einen Aufsatzes auf das mindestens eine Gebäck in einem gemeinsamen Verfahrensschritt erfolgen. Außerdem kann das Aufbringen des mindestens einen Aufsatzes auf das mindestens eine Gebäck zumindest teilweise in zumindest eine Vertiefung an der Oberfläche des Gebäcks erfolgen, wobei die zumindest eine Vertiefung insbesondere eine Tiefe von mindestens 1 mm aufweisen kann. Insbesondere wenn das Gebäck eine Vertiefung aufweist, deren Tiefe der Höhe des Aufsatzes entspricht, kann der Aufsatz mit einem One-Shot-Verfahren direkt in dieser Vertiefung, die dabei als Form dienen kann, hergestellt werden. Dadurch entfällt der Verfahrensschritt des Aufbringens des Aufsatzes auf das Gebäck oder des Gebäcks auf den Aufsatz. Insbesondere muss der Aufsatz nicht aus einer Form, in der er hergestellt wurde, gelöst werden, wobei es leicht zu Beschädigungen des Aufsatzes kommen kann. Insgesamt wird das Herstellungsverfahren der Backware durch den Entfall des Aufbringens vorteilhaft vereinfacht. Auch wenn Herstellen und Aufbringen des Aufsatzes getrennte Verfahrensschritte sind, stellt das Aufbringen in Vertiefungen an der Gebäckoberfläche einen Vorteil dar, weil dadurch die genaue und zuverlässige Positionierung des Aufsatzes auf dem Gebäck vereinfacht wird. So wird die Uniformität der Backwaren gewährleistet, da über eine einheitlich angeordnete Vertiefung der Aufsatz ebenfalls einheitlich auf dem Gebäck angebracht werden kann. Die Vertiefung weist dabei eine Tiefe von zumindest 0,5 mm, bevorzugt 1 mm und besonders bevorzugt mehr als 1 mm auf, wobei die Vertiefung in jedem Fall geringer ist, als die maximale Dicke des Gebäcks.

In einer Ausführungsart des erfindungsgemäßen Verfahrens kann vor dem Aufbringen des mindestens einen Aufsatzes auf das mindestens eine Gebäck die Haftfähigkeit des Aufsatzes an dem Gebäck erhöht werden. Das kann beispielsweise durch Anschmelzen der Umhüllung im Bereich der Kontaktfläche des Aufsatzes zum Gebäck und/oder Aufbringen eines Bindemittels, insbesondere einer zucker- oder fettbasierten Masse sein, auf zumindest einen Teil der Oberfläche des Gebäcks und/oder der Kontaktfläche erfolgen. Weiterhin kann das Bindemittel Zusatzstoffe enthalten, welche bevorzugt Bestandteile der Nahrungsmittelzusammensetzung der Backware sind. Das Bindemittel ist insbesondere an den Stellen anzubringen, welche nicht unter Durchbrechungen der Umhüllung des Aufsatzes liegen. Dies kann beispielsweise dadurch erreicht werden, dass eine Vorrichtung zum Auftragen des Bindemittels bereitgestellt wird, die eine Anzahl von Auftrageeinrichtungen aufweist, welche nicht komplementär zu den Durchbrechungen erzeugenden Elementen der Herstellungsform des Aufsatzes sind.

Das Aufbringen des Gebäcks auf den Aufsatz erfolgt bevorzugt, solange der Aufsatz nach dem One-Shot-Verfahren bei Umgebungstemperatur noch nicht vollständig erstarrt ist. Durch die Anpassungsfähigkeit hinsichtlich der Form wird die Haftung zwischen Kontaktfläche der Umhüllung und der Unterseite des Gebäcks mit einer typischerweise rauen, unregelmäßigen Oberfläche begünstigt bzw. gefördert, ohne dass zusätzliche Haftvermittler eingesetzt werden müssten.

In einer Ausführungsart des erfindungsgemäßen Verfahrens kann insbesondere ein Gebäck aus einem Biskuitteig oder anderen Massen und Teigen, das bevorzugt eine weiche Konsistenz und/oder eine lockere Textur hat als das mindestens eine Gebäck verwendet werden. Die Wahrnehmung einer lockeren Textur kann beispielsweise durch eine grob- oder feinporige Struktur mit Gaseinschlüssen, durch Verwendung eines spezifischen Enzyms und/oder durch Feuchthaltemittel wie Glycerin erreicht werden. Die Härte bzw. Weichheit/Softness des Gebäcks kann so beispielsweise innerhalb von 24 Stunden nach dem Backen zwischen 0,5 - 30 N eingestellt werden.

In einer Ausführungsart des erfindungsgemäßen Verfahrens kann eine zumindest Fett, Bindemittel, Gewürze, Zucker, Schokolade, Nüssen, Aromata, Salz und/oder Karamell, insbesondere als Einzelzutaten, enthaltende Rohstoffmischung als Rohstoffmischung der zumindest einen Umhüllung verwendet werden. Durch die Verwendung von Einzelzutaten können die Produkteigenschaften in einem weiteren Bereich und zuverlässiger eingestellt werden, als wenn Zutaten verwendet werden, die in einer Matrix gebunden sind. Für einen besonders zuverlässigen One-Shot-Prozess kann die Dichte der Rohstoffmischung der Umhüllung im Bereich von 0,5 g/cm³ bis 2,0 g/cm³ liegen.

In einer Ausführungsart des erfindungsgemäßen Verfahrens kann eine zumindest Wasser, Fett, Karamell, eine Gasphase und/oder Früchte, insbesondere in Form von frischen Früchten, Fruchtkonzentrat, Fruchtpulver oder Konfitüre, enthaltende Rohstoffmischung als Rohstoffmischung der zumindest einen Kernmasse verwendet werden. Beispielsweise durch Einschluss einer Gasphase, mit der die Kernmasse aufgeschäumt wird, können die sensorischen Eigenschaften der Kernmasse wie das Mundgefühl besonders vorteilhaft eingestellt werden. Für einen besonders zuverlässigen One-Shot-Prozess kann die Dichte der Rohstoffmischung der Kernmasse im Bereich von 0,3 g/cm³ bis 3,0 g/cm³ liegen.

Weiterhin wird die Verwendung einer Nahrungsmittelzusammensetzung als Rohstoffmischung der zumindest einen Kernmasse in einem erfindungsgemäßen Verfahren dargestellt.

Dabei umfasst die Nahrungsmittelzusammensetzung wenigstens folgende Rohstoffe, welche zu einem Nahrungsmittel mit gelartigen Eigenschaften verarbeitet werden können: ein, zwei oder mehr Lösungsmittel; ein, zwei oder mehr Hydrokolloide und insbesondere wenigstens ein, zwei oder mehrere Hilfsstoffe für die Bildung von gelartigen Netzwerkstrukturen. Das Lösungsmittel kann zumindest teilweise separat von Hydrokolloiden und Hilfsstoffen bereitgestellt werden. Der wenigstens eine Hilfsstoff kann insbesondere als Pflanzenfaser in Form einer Einzelzutat der Nahrungsmittelzusammensetzung bereitgestellt werden.

Ein Gel ist nach allgemeiner Definition ein disperses System, das aus mindestens zwei Komponenten besteht. Die feste Komponente bildet dabei beispielsweise ein schwammartiges, dreidimensionales Netzwerk aus Gelbrücken, dessen Poren durch eine Flüssigkeit (Lyogel) oder ein Gas (Xerogel) ausgefüllt sind. Die flüssige Komponente ist dadurch in der festen immobilisiert. Ist das Netzwerk hochporös und Luft das eingelagerte Gas, so wird das Gel auch als Aerogel bezeichnet. Beide Komponenten durchdringen sich dabei vollständig (bikohärent). Für Nahrungsmittel relevante gelartige Eigenschaften sind eine weiche, flexible Konsistenz, ein geringer Schmelzpunkt insbesondere bei Mundtemperatur, einer hinreichenden Festigkeit und ein im Vergleich zu Backware hoher Flüssigkeitsgehalt insbesondere in der Mundwahrnehmung.

Die Verwendung einer Nahrungsmittelzusammensetzung als Rohstoffmischung für die Kernmasse des Aufsatzes einer erfindungsgemäßen Backware ist vorteilhaft, da sie beim Konsum im abgebundenen, also im gelierten Zustand, ein angenehmes, mousseartiges Mundgefühl vermittelt, so dass der Konsument eher an ein weiches Mousse erinnert wird, welches zart auf der Zunge zerfließt und einen starken Fruchteindruck hinterlässt. Vorteilhafterweise umfasst die Nahrungsmittelzusammensetzung hierbei im abgebundenen Zustand ein zumindest teilweise unterbrochenes Gelnetzwerk. Dies ist insbesondere durch die Zugabe der Pflanzenfaser bedingt, welche aufgrund ihrer Form und Größe die Ausbildung eines durchgängigen, dreidimensionalen Gelnetzwerkes unterbindet. Bevorzugt ist gerade so viel Pflanzenfaseranteil vorgesehen, dass das Hydrokolloid ein zumindest teilweise unterbrochenes, aber dennoch stabiles, insbesondere formstabiles, gelartiges Netzwerk in der Füllung ausbildet, so dass der glatte, glasige, gummiartige Biss verschwindet und stattdessen eine weiche und zarte Konsistenz ermöglicht wird.

Die Zugabe von Hydrokolloiden bei der Nahrungsmittelzusammensetzung ist von Vorteil, da hierdurch die flüssigen Einzelzutaten der Nahrungsmittelzusammensetzung abbindbar sind, so dass ein dreidimensionales Gelnetzwerk ausbildbar ist. Als Hydrokolloide werden bevorzugt Polysaccharide aus der Gruppe Pektine, Agar, Alginate, Carrageen, Johannisbrotkernmehl, Guarkernmehl, Xanthan, Gummiarabicum, Methylcellulose, Hydroxymethylcellulose, Carboxymethylcellulose, Stärke, modifizierte Stärke, wie beispielsweise Dextrin, und/oder einer Mischung hieraus ausgewählt. Derartige Hydrokolloide sind von Vorteil, da sie in Gegenwart von Flüssigkeit quellen und in Gegenwart von Zucker, Säure und/oder Elektrolyten eine Gelierung bedingen. Unter Ausbildung einer gallertartigen Masse erfolgt die Abbindung der Nahrungsmittelzusammensetzung zu einem Nahrungsmittel. Meist bevorzugt werden als Hydrokolloide Pektine eingesetzt, welche als hoch- und/oder niederveresterte Pektine und/oder amidierte Pektine ausgebildet sind. Darüber hinaus sind neben den Polysacchariden auch tierische und/oder pflanzliche Proteine als Hydrokolloide denkbar, wie beispielsweise Gelatine.

Um eine Pflanzenfaser als Einzelzutat bereitzustellen, ist sie aus ihrer üblichen Umgebung, wie zum Beispiel Fruchtmus oder Marmelade zu isolieren. Der Vorteil von derart isolierten Pflanzenfasern ist, dass die für die Bildung einer Gelstruktur oder einer gelartigen Struktur notwendigen Parameter, wie zum Beispiel der Quellgrad mit Lösungsmittel, besser eingestellt werden können. Viele Pflanzenfasern bilden an sich keine Gelstruktur aus, können aber in einem gequollenen Zustand, in einer gelartigen Matrix eingebettet sein und dadurch beispielsweise die Festigkeit des Nahrungsmittels verändern, so dass das Mundgefühl über das stöchiometrische Verhältnis von Pflanzenfasern zu anderen Rohstoffen, insbesondere Hydrokolloiden, einstellbar ist. Bevorzugt sind Pflanzenfasern ausgewählt, die eine Synärese aus dem Nahrungsmittel mit gelartigen Eigenschaften unterbindet oder zumindest hemmt. Eine genaue Einstellung des Pflanzenfaseranteils ist deshalb vorteilhaft, weil ein zu hoher Anteil an Pflanzenfasern im Nahrungsmittel für den Verbraucher unangenehme Mundeigenschaften zur Folge haben kann, weil das Nahrungsmittel beispielsweise weniger weich und weniger saftig schmeckt. Eine Verwendung von Pflanzenfasern ist zur Einstellung der Konsistenz insbesondere dann vorteilhaft, wenn ein Hydrokolloid scherreversible Gele ausbildet und nach der Herstellung des Aufsatzes trotz Scherung und dadurch bewirkter temporärer weicherer Konsistenz letztlich seine ursprüngliche "feste" Konsistenz wiedererlangt, abhängig beispielsweise von anwesenden Hilfsstoffen und der Hydrokolloid-Konzentration. In analoger Weise können auch die Hydrokolloide als Einzelzutat bereitgestellt werden. Isolierte Pflanzenfasern haben den weiteren Vorteil, dass sie unabhängig von Stoffen der Ursprungspflanze sind, die eventuell einen unerwünschten Eigengeschmack oder unverträgliche Eigenschaften zum Beispiel bei der Verwendung haben. Pflanzenfasern als Einzelzutat können durch folgende Verfahren isoliert werden: Feststoffextraktion mittels eines Lösungsmittels (z.B. Ethanol) mit anschließender Trocknung, Extraktion unter Verwendung einer Säure mit anschließender Trocknung oder ultraschallgestütze Extraktion mit anschließender Trocknung. Die industrielle Nutzung von Pflanzenfasern als Einzelzutat erlaubt die Einhaltung und die Kontrolle der gewünschten Produktqualität, die gezielte Einstellung der Eigenschaften, beispielsweise des Quellzustandes und somit die langfristige Gewährleitung der sensorischen Merkmale, wie zum Beispiel eines Mundgefühls.

Insbesondere kann wenigstens ein Hydrokolloid und/oder wenigstens eine Pflanzenfaser in natürlicher Form vorliegen. Zwar können sie beispielsweise isoliert werden, liegen aber in ihrer chemischen und physikalischen Struktur so vor, wie sie in Obst oder Gemüse enthalten sind. Beispiele für Hydrokolloide wie Polysacharide oder Proteine in natürlicher Form sind: Aus Landpflanzen gewonnene Hydrokolloide, zum Beispiel Pektine, Stärke, Gummi Arabicum, Galactomannane wie Guarkernmehl oder Johannisbrotkernmehl; aus Algen gewonnene Hydrokolloide, beispielsweise Agar, Carrageen oder Alginate; tierische Hydrokolloide, beispielsweise Gelatine oder Caseinate; Hydrokolloide bakterieller Herkunft, beispielsweise Xanthan, Gellan oder Scleroglucan.

Wenigstens ein Hydrokolloid und/oder wenigstens eine Pflanzenfaser können in natürlicher und/oder modifizierter Form vorliegen. Die Modifizierung kann beispielsweise chemisch, physikalisch oder enzymatisch erfolgen. Beispiele für chemisch modifizierte Hydrokolloide, beispielsweise unter Verwendung eines Lösungsmittels wie Ammoniak sind amidiertes Pektin, Cellulose-Derivate wie Methylcellulose (MC), Hydroxypropylmethylcellulose (HPMC) oder Stärke-Derivate wie Stärkeether und -ester. Ein Beispiel für physikalisch modifizierte Hydrokolloide, beispielsweise unter Verwendung eines Extruders, ist Hydraxan. Ein Beispiel für enzymatisch modifizierte Hydrokolloide, beispielsweise unter Verwendung einer Lipase (Enzym), sind maleatiertes Guar oder succiniertes Guar.

Ein besonders bevorzugter Ausgangsstoff für natürliche oder modifizierte Hydrokolloide sind zumindest Teile der Bestandteile aus den Samen des Johannisbrotbaumes, der im gemahlenen Zustand auch als Johannesbrotkernmehl bezeichnet wird. Es können ausgewählte typische Bestandteile des Johannisbrotkernsamens unabhängig von ihrer rohstofflichen Herkunft aus dem Naturprodukt Johannisbrotsamen, anderen Pflanzen oder einem Syntheseverfahren verwendet werden. Johannisbrotsamen bestehen typischerweise aus etwa 30 % Schale, etwa 25 % Keimling und etwa 45 % Endosperm. Das Johannisbrotkernmehl als Hydrokolloid ist manchmal leicht beige und geschmacksneutral. Es umfasst insbesondere ein Polysaccharid, das größtenteils aus Galaktose (20 %) und Mannose (80 %) besteht. Dieser Mehrfachzucker kann vom menschlichen Körper nur teilweise verdaut werden und gilt deshalb als diätischer Ballaststoff. Neben dem Polysaccharid sind noch ca. 6 % Eiweißstoffe sowie wasserlösliche Pflanzenfarbstoffe (Flavonoide) und Spuren von Mineralstoffen enthalten. Im Wesentlichen entsprechen die Eigenschaften denen des Guarkernmehls, wobei die Viskosität der Lösungen bei gleicher Konzentration etwas geringer ist. Johannisbrotkernmehl kann zwischen dem 80- und 100-fachen seines Eigengewichts an Wasser binden, ist damit circa fünfmal so quellfähig wie gewöhnliche Stärke. Weiterhin zeigt es Synergien mit Xanthan, Carrageen und Agar. Ein besonderer Vorteil von diesen Bestandteilen des Johannisbrotkernmehls ist, dass es die Synärese, also den Wasseraustritt aus einer Gelphase, zumindest hemmt oder verhindert. Besteht eine Backware zum Beispiel aus einer Nahrungsmittelzusammensetzung in Kontakt zu einem hydrophileren Gebäck, so ist der Wirkmechanismus der Synärese gehemmt oder blockiert, so dass weniger Lösungsmittel wie Wasser vom Nahrungsmittel in das Gebäck übertritt. Der Wasserübergang durch den Wirkmechanismus des osmotischen Drucks bleibt jedoch erhalten. So kann der Feuchtigkeitsgrad des Gebäcks über eine bestimmte Lagerzeit begrenzt werden, so dass da Gebäck eine weiche Konsistenz beibehält ohne zu durchnässen oder die Nahrungsmittelzusammensetzung auszutrocknen.

Ein Beispiel für modifizierte Pflanzenfasern ist microcrystalline Cellulose (MCC). Die vorteilhaften Eigenschaften von modifizierten Pflanzenfasern gegenüber nicht modifizierten Pflanzenfasern sind beispielsweise: höhere Erreichbarkeitsgrad, beispielsweise höhere Hydratisierbarkeit wegen erhöhter Fähigkeit zur Aufnahme von Lösungsmitteln wie Wasser, Ausbildung einer besseren, insbesondere gelartigen, texturfettähnliche Konsistenz, größere Flexibilität in der Wahl von Prozessparametern, unter anderem keine spezielle Temperaturführung, sodass der Herstellungsprozess flexibler, schneller, kostengünstiger wird und neue Herstellungsverfahren durch neu erschlossene Parameterbereiche (wie Temperatur oder Druck) ermöglicht werden.

Hydrokolloide und/oder Pflanzenfasern werden modifiziert, um ihnen insbesondere folgende Eigenschaften zu verleihen: Erzielung gleicher gelartigen Eigenschaften der Nahrungsmittelzusammensetzung bei einer Verwendung geringerer Konzentrationen an Hydrokolloid/Pflanzenfasern, damit verbundene Kosteneinsparung; Steigerung und Erhaltung der Viskosität über die Lagerzeit; Bildung gelartiger Strukturen; Reduzierung von Synärese und/oder Verbesserung der kolloidalen Löslichkeit.

Zur Erzielung und Einstellung von bestimmten gelartigen Eigenschaften kann der Quellgrad mit Lösungsmittel wenigstens eines Hydrokolloides und/oder wenigstens einer Pflanzenfaser auf bevorzugt 1 - 25 Gewichts-% bezogen auf die jeweilige Trockenmasse jeweils separat vordefiniert werden, bevor die Rohstoffe miteinander vermischt werden. Einstellbare Eigenschaften sind beispielsweise die Viskosität oder sensorische Eigenschaften (z.B. Konsistenz und Bissfestigkeit). Der technische Mechanismus dieser Einstellbarkeit durch den Vorquellgrad, bzw. im Falle des Lösungsmittels Wasser die Vorhydratisierung, beruht auf dem Wettbewerb von Hydrokolloiden und Pflanzenfasern untereinander um freies Lösungsmittel. Wird beispielsweise ein Hydrokolloid stärker vorhydratisiert als eine Pflanzenfaser der Nahrungsmittelzusammensetzung, so wird durch diesen Vorsprung in der Hydratisierung am Ende der Hydratisierungsreaktion des Hydrokolloid schneller hydratisiert sein als ohne Vorhydratisierung, absolut und bezogen auf die relative Hydratisierung der Pflanzenfaser. Zum Beispiel können durch die Vorhydratisierung von Pflanzenfasern in einem Lösungsmittel (wie Wasser) die Eigenschaften des gelartigen Produktes beeinflusst werden, da sich das Hydrokolloid nicht mehr im starken Wettbewerb mit den Pflanzenfasern um das Wasser befindet. Als Resultat der Wechselwirkung zwischen Pflanzenfasern, Hydrokolloiden und Lösungsmittel kommt es zur Ausbildung eines Produktes mit spezifischen, gelartigen Eigenschaften.

Die wenigstens eine Pflanzenfaser kann als rieselfähiges Pulver, dessen Körnung insbesondere im Bereich von 0,01 µm bis 5 mm ausgebildet ist, vorgesehen und/oder als Paste oder viskose Lösung bereitgestellt sein. So lässt sich die Pflanzenfaser leicht mit den weiteren Einzelzutaten vermengen und vermischen, sodass sich eine einfache und schnelle Verarbeitbarkeit der Nahrungsmittelzusammensetzung ergibt. Grundsätzlich können alle Einzelzutaten der Nahrungsmittelzusammensetzung in einem Premix- oder Compound-System bereitgestellt und verwendet werden.

Außerdem kann die wenigstens eine Pflanzenfaser geschmacks- und/oder geruchsneutral und/oder zusatzstofffrei ausgebildet sein. Vorteilhaft daran ist, dass mit einer solchen Pflanzenfaser die gelartigen Eigenschaften der Nahrungsmittelzusammensetzung eingestellt werden können, ohne den Geschmack oder Geruch der Nahrungsmittelzusammensetzung zu beeinflussen oder das Auftreten unerwünschter Nebenwirkungen von Zusatzstoffen zu riskieren.

In bevorzugten Ausgestaltungen der Erfindung umfasst die Nahrungsmittelzusammensetzung der Kernmasse:
a. 15 - 30 Gewichts-% Lösungsmittel;
b. 0,01 - 12,0 Gewichts-%, bevorzugt 0,1 - 5,0 Gewichts-%, mehr bevorzugt 0,5
   - 1,0 Gewichts-%, natürliches und/oder modifiziertes Hydrokolloid; und/oder
c. 0,01 - 5,0, bevorzugt im 0,05 - 3,0, Gewichts-% natürliche und/oder modifizierte Pflanzenfaser
bezogen auf die Gesamtmasse der Nahrungsmittelzusammensetzung der Kernmasse.

Die Zugabe des Pflanzenfaseranteils, bevorzugt in einem Bereich von 0,05 - 1,5 Gewichts-%, bezogen auf die Gesamtmasse der Nahrungsmittelzusammensetzung, erweist sich als vorteilhaft, da dieser Anteil einerseits ausreichend ist, die im abgebundenen Zustand ausgebildete Gelstruktur zumindest teilweise zu unterbrechen, aber andererseits dennoch deren Formstabilität zu bedingen.

Wenigstens ein Lösungsmittel der Nahrungsmittelzusammensetzung kann eine wasserhaltige, ölhaltige und/oder alkoholhaltige Flüssigkeit sein. Wenigstens eine Pflanzenfaser kann aus der Gruppe Obstfasern insbesondere aus Zitrusfrüchten, Gemüsefasern, Getreidefasern und/oder einer Kombination hieraus ausgewählt sein. Zitrusfrüchte sind besonders vorteilhaft, da sie einen hohen Anteil an Pflanzenfasern in den Schlauchkanälen und dem Mesokarp aufweisen. Zudem lassen sich die Pflanzenfasern aus besagten Teilen der Zitrusfrüchte, beispielsweise Zitronen, Orangen, Grapefruits, einfach extrahieren.

Wenigstens ein Hydrokolloid kann ein Polysaccharid, bevorzugt Stärke, sein.

Zusätzlich kann die Nahrungsmittelzusammensetzung wenigstens einen der weiteren Rohstoffe umfassen: wenigstens ein Süßungsmittel, wenigstens einen Sirup, wenigstens eine Fruchtflüssigkeit, wenigstens ein Aroma, wenigstens ein Stückgut, wenigstens eine Säure; und/oder wenigstens ein Salz. Die zusätzlichen Rohstoffe können folgenden Anteil an der Gesamtmasse der Nahrungsmittelzusammensetzung (100 %) der Kernmasse haben:
a. 10 - 80 Gewichts-%, bevorzugt 40 - 70 Gewichts-%, meist bevorzugt 25 - 30 Gewichts-%, Süßungsmittel, wobei das Süßungsmittel insbesondere auch Sirup umfassen kann;
b. 30 - 60 Gewichts-%, bevorzugt 35 - 60 Gewichts-%, mehr bevorzugt 40 - 50 Gewichts-%, Sirup;
c. 1,0 - 40 Gewichts-%, bevorzugt 1,0 - 20,0 Gewichts-%, mehr 2,0 - 15,0 Gewichts-%, Fruchtflüssigkeit;
d. 0,01 - 1,5 Gewichts-%, bevorzugt 0,05 Gewichts-%, bis 1,0 Gewichts-%, mehr bevorzugt 0,1 bis 0,3 Gewichts-%, Aroma;
e. 0,01 - 60 Gewichts-%, bevorzugt 0,5 - 40 Gewichts-%, mehr bevorzugt 1,0 - 20 Gewichts-% und meist bevorzugt 5,0 - 10 Gewichts-% Stückgut;
f. 0,1 - 5,0 Gewichts-%, bevorzugt 0,3 - Gewichts-%, mehr bevorzugt 0,5 -1,0 Gewichts-%, Säure und/oder
g. 0,05 - 3,0 Gewichts-%, bevorzugt 0,075 - 2,5 Gewichts-%, noch bevorzugter 0,075 - 1,5 Gewichts-%, noch 1,1 - 1,3 Gewichts-% Salz.

Das wenigstens eine Süßungsmittel kann aus der Gruppe der Süßstoffe oder Saccharide, bevorzugt Monosaccharide und/oder Disaccharide, mehr bevorzugt Glucose, Saccharose, Fructose, und/oder einer Mischung hieraus ausgewählt sein. Der hohe Anteil des Süßungsmittels ist vorteilhaft, da hierdurch die Nahrungsmittelzusammensetzung ihren süßen Geschmack erhält sowie zur Haltbarkeit und mikrobiologische Stabilität des Endprodukts beiträgt. Zudem ist das Süßungsmittel notwendig, um die Nahrungsmittelzusammensetzung in Zusammenwirkung mit Hydrokolloid und Säure abzubinden. Somit ist die Nahrungsmittelzusammensetzung von einem ursprünglich flüssigen Zustand in einen gelartigen Zustand überführbar. Bevorzugt eignen sich hierbei Saccharide, da diese einfach und schnell die Entstehung eines gelartigen Netzwerks unterstützen. Der wenigstens ein Sirup als Süßungsmittel kann aus natürlichen und/oder künstlichen Siruparten, bevorzugt Glucose-Fructosesirup, Glucosesirup, Fructosesirup, Honig, Ahornsirup, Reissirup und/oder einer Mischung hieraus ausgewählt sein. Als Sirup ist hierbei eine dickflüssige, konzentrierte Lösung zu verstehen, welche eine hohe Süßkraft aufweist. Je nach Süßkraft der verwendeten Siruparten ist deren Gewichtsanteil an der Nahrungsmittelzusammensetzung variabel ausgebildet. Darüber hinaus sind auch als Sirup verarbeitete Lösungen, wie beispielsweise Dicksaft, verwendbar.

Die wenigstens eine Fruchtflüssigkeit kann als Saftkonzentrat, bevorzugt als Obstsaftkonzentrat, mehr bevorzugt Orangensaftkonzentrat, Zitronensaftkonzentrat, Cranberrysaftkonzentrat, Pampelmusensaftkonzentrat, Grapefruitsaftkonzentrat und/oder einer Mischung hieraus ausgewählt sein. Die Zugabe eines Saftkonzentrates als Fruchtflüssigkeit ist dahingehend vorteilhaft, da ein Saftkonzentrat einen wesentlich intensiveren Saftgeschmack aufweist und so bereits durch geringe Zugabemengen ein deutlicher Fruchtgeschmack mit einem gewissen Säuregrad bedingt wird. Selbstverständlich ist vorliegend die Verwendung von Saftkonzentrat als Einzelzutat nicht als beschränkend zu verstehen, sondern es ist auch denkbar, anstelle des Saftkonzentrates, beispielsweise Direktsaft, Nektar oder auch Fruchtmark einzusetzen.

Das wenigstens ein Aroma kann als synthetisches Aroma und/oder natürliches Aroma ausgewählt sein. Dies ist vorteilhaft, da durch die Zugabe von Aroma die Nahrungsmittelzusammensetzung sowohl einen spezifischen Geruch und/oder einen spezifischen Geschmack erhält. Im vorliegenden Fall sind unter Aroma sowohl Aromastoffe als auch Aromaextrakte zu verstehen. Bevorzugt handelt es sich bei Aromaextrakten um natürliche Aromastoffe, beispielsweise aus Früchten. Bevorzugt werden vorliegend natürliche Aromen verwendet, welche zu mindestens 50 %, bevorzugt mindestens 65 %, meist bevorzugt mindestens 85 %, aus Früchten und/oder Fruchtbestandteilen gewonnen werden. Meist bevorzugt wird ein natürliches Aroma auf Basis eines oder mehrerer Trägermitteln mit hydrophilen (z.B. Propylenglykol, Triacetin, Ethanol) oder hydrophoben (Speiseöl) Eigenschaften verwendet, mehr bevorzugt Zitrusschalenöl, meist bevorzugt Orangenschalenöl. Darüber hinaus sind auch andere Aromen, wie beispielsweise Kokosaroma, Pistazienaroma, Nussaroma, Schokoladenaroma, Butteraroma, Alkoholaroma oder dergleichen denkbar.

Die Zugabe von Stückgut zu der Nahrungsmittelzusammensetzung erweist sich als vorteilhaft, da hierdurch der Geschmack der Nahrungsmittelzusammensetzung sowie deren Konsistenz im abgebundenen Zustand zusätzlich verbessert werden. Das Stückgut bedingt eine weitere Unterbrechung des dreidimensionalen Gelnetzwerkes und wird bevorzugt in dieses formstabil eingelagert. Durch die Zugabe von bevorzugt obsthaltigem Stückgut, wie beispielsweise Orangen-, Zitronenstücke und/oder -zesten, erhält die Nahrungsmittelzusammensetzung neben ihrer moussartigen, lockeren Konsistenz einen weiteren Geschmacksträger. Zudem erweist sich das Stückgut als vorteilhaft, da dieses von der Konsistenz her gesehen, fester ausgebildet ist, als die Nahrungsmittelzusammensetzung, sodass der Konsument bei einem Biss in die abgebundene Nahrungsmittelzusammensetzung sowohl deren mousseartige Konsistenz als auch ein starkes Fruchtgefühl durch tatsächlich vorhandene Fruchtstücke erlebt. Selbstverständlich ist die Verwendung von Stückgut nicht auf den Obstbereich beschränkt, sodass auch kakaohaltiges Stückgut, bevorzugt Schokolade, nusshaltiges Stückgut, bevorzugt Haselnüsse, Kokosflocken oder Walnüsse, sowie zuckerhaltiges Stückgut, wie bevorzugt Karamell, oder einer Mischung aus dem aufgezählten Stückgut, der Nahrungsmittelzusammensetzung beigemengt werden können. Hierdurch ergeben sich für den Konsumenten völlig neue Geschmackserlebnisse. Insbesondere kann das wenigstens eine Stückgut frisch, konserviert, eingekocht, getrocknet und/oder gefriergetrocknet sein. Beispielsweise unterscheiden sich gefrorenes, getrocknetes und frisches Obst insbesondere im Wassergehalt bezogen auf die Gesamtmasse des Obstes, so dass der Wassergehalt der Nahrungsmittelzusammensetzung über die Zugabe von gefriergetrocknetem Obst statt frischem Obst oder einer Mischung davon eingestellt werden kann. Der Wassergehalt wiederum beeinflusst die gelartigen Eigenschaften des Nahrungsmittels.

Die wenigstens eine Säure kann vorzugsweise eine organische Säure, bevorzugt Citronensäure, ausgewählt sein. Selbstverständlich ist die Verwendung nicht auf nur eine Säure beschränkt, sondern es ist denkbar, auch mehrere Säuren als Säuremischung der Nahrungsmittelzusammensetzung beizumengen. Die Zugabe von Säure ist insbesondere vorteilhaft, da diese zur Einstellung des pH-Werts der Nahrungsmittelzusammensetzung dient. Ein saurer pH-Wert kann stark begünstigend auf die Gelierung und die Ausbildung eines dreidimensionalen Gelnetzwerks wirken.

Das wenigstens eine Salz kann insbesondere ein Alkali- und/oder Erdalkalisalz sein. Es ist auch ein salzhaltiger Komplex, wie beispielsweise Calcium-Natrium-Tartrat, inbegriffen. Der Vorteil eines solchen Komplexes ist, dass das zur Gelbildung notwendige Kation langsamer freigegeben wird als bei einer einfachen Salzverbindung, so dass die Gelierung verlangsamt werden kann. Dies wiederum ist beispielsweise vorteilhaft, um eine zu hohe temporäre Viskosität bei einem Abfüllvorgang im Herstellungsprozess einer Backware zu verhindern. Die Zugabe von bestimmten Salzen wie zum Beispiel Salzen mit Calcium-Kationen kann die Gelierung von manchen Hydrokolloiden, wie beispielsweise Alginat oder Pektin, steuerbar beeinflussen oder sogar überhaupt erst ermöglichen. Besonders vorteilhaft wirkt sich im letzten Fall aus, dass über das stöchiometrische Verhältnis von Salz zu Hydrokolloiden und gegebenenfalls anderen salzbindender Rohstoffen die Anzahl der Gelbrücken pro Einheit an Stoffmenge, Volumen oder Gewicht des Hydrokolloids beziehungsweise der gesamten Nahrungsmittelzusammensetzung bestimmt werden. Eine höhere Dichte an Gelbrücken korreliert mit einer höheren Viskosität der Nahrungsmittelzusammensetzung und bewirkt ein Mundgefühl höherer Bissfestigkeit. Vorteilhaft ist weiterhin, dass angebundene Salz im Wesentlichen nicht zum Geschmack beiträgt, damit beispielsweise ein süßes Nahrungsmittel nicht zu salzig schmeckt aber trotzdem eine einstellbare Viskosität hat. Ein weiterer Vorteil ist, dass sich über die Zugabe eines geeigneten Salzes insbesondere in geeigneter Form (beispielsweise kristallin, vorhydratisiert oder in flüssiger Lösung einer definierten Konzentration) und Menge (insbesondere dem stöchiometrischen Verhältnis zu anderen Rohstoffen der Nahrungsmittelzusammensetzung) der Gelierungszeitpunkt definieren lässt. Wird beispielsweise in eine wässrige Nahrungsmittelzusammensetzung ein wenig hydratisiertes Calcium-Salz zugegeben, dissoziieren seine Ionen zunächst und hydratisieren dann bis zu einem Hydratisierungsgrad, der für die Ingangsetzung der Gelbildung des Hydrokolloids erforderlich ist, und setzen so die Gelbildung zeitverzögert in Gang.

Ferner ist denkbar, dass die Nahrungsmittelzusammensetzung zusätzlich wenigstens ein Mineral wie Calcium, Zink und/oder ein Vitamin, bevorzugt Vitamin C, umfasst. Dies ist insbesondere für die Gesundheit der Konsumenten von Vorteil.

Die Erfindung umfasst ferner eine Backware mit mindestens einem Gebäck und mindestens einem mit dem mindestens einen Gebäck verbundenen Aufsatz. Der mindestens eine Aufsatz weist mindestens eine flüssigkeitshaltige, insbesondere gelartige, Kernmasse und mindestens eine für die Flüssigkeit der flüssigkeitshaltigen Kernmasse undurchlässige, bevorzugt fettbasierte, Umhüllung der Kernmasse auf. Die Umhüllung weist an einer Kontaktfläche zu dem Gebäck eine Anzahl von Durchbrechungen zur kontrollierten Befeuchtung des Gebäcks aus der flüssigkeitshaltigen Kernmasse auf.

Ein Kerngedanke der Erfindung ist, zumindest eine flüssigkeitshaltige Kernmasse mit einer Umhüllung aus einer für die Flüssigkeit undurchlässigen Schicht zu umgeben. Die Umhüllung dient insbesondere als Sperrschicht zwischen der flüssigkeitshaltigen Kernmasse und einem Gebäck der Backware. Dabei sind in einer Kontaktfläche der Umhüllung, welche mit dem Gebäck zu verbinden ist, Durchbrechungen beim Herstellungsprozess der Umhüllung belassen oder nachträglich hergestellt werden. Durch diese Durchbrechungen und ihre Abmessungen und Anordnung kann der Stofftransport zwischen der flüssigkeitshaltigen Kernmasse und dem Gebäck eingestellt werden. So kann ein Stofftransport von insbesondere Flüssigkeit aus der flüssigkeitshaltigen Kernmasse in das Gebäck erfolgen. Vorteilhafterweise kann sich so ein Gleichgewicht eines Stoffstroms von Flüssigkeit aus dem Gebäck in eine Umgebung der Backware und eines Stoffstroms von Flüssigkeit aus der flüssigkeitshaltigen Kernmasse durch die Durchbrechungen in das Gebäck einstellen, so dass zumindest ein innerer Bereich des Gebäcks kontinuierlich befeuchtet wird, zumindest solange nichtgebundene Flüssigkeit in der flüssigkeitshaltigen Kernmasse vorliegt.

Die flüssigkeitshaltige Kernmasse kann abgesehen von der Kontaktfläche der Umhüllung zum Gebäck von allen Seitenflächen der Umhüllung im Wesentlichen flüssigkeitsdicht umschlossen sein. Im Wesentlichen flüssigkeitsdicht bedeutet im vorliegenden Fall, dass die Umhüllung nur an vorbestimmten Stellen flüssigkeitsdurchlässig ist, an allen anderen Bereichen allerdings flüssigkeitsundurchlässig ausgestaltet ist, um eine maximale Haltbarkeit der Backware zu gewährleisten. Die Textur der Backware ist unter anderem davon abhängig, zu welchem Zeitpunkt der überwiegende Anteil der Flüssigkeit in der flüssigkeitshaltigen Kernmasse bereits entwichen ist. Somit ist es vorteilhaft, einen zur Befeuchtung des Gebäcks notwendigen Bereich derart auszugestalten, dass die Befeuchtung sichergestellt ist, aber nicht übermäßig viel Flüssigkeit aus der flüssigkeitshaltigen Kernmasse ausdringt.

In einer Ausgestaltung der Erfindung weisen Gebäck und Aufsatz einer erfindungsgemäßen Backware um höchstens 5 mm, bevorzugt höchstens 2 mm, besonders bevorzugt höchstens 1 mm, voneinander abweichende Konturen in der Ebene ihrer gemeinsamen Kontaktfläche auf. Durch solche im Wesentlichen kongruente Kontaktflächen zueinander wird erreicht, dass an der Kontur der Kontaktflächen kein Überstand von Gebäck oder Aufsatz vorliegt. An dieser bevorzugten Ausführungsform ist vorteilhaft, dass die Backware keine Vorsprünge aufweist, an denen sie, beispielsweise durch Stöße bei Abfüllung oder Transport, leicht beschädigt werden könnte. Außerdem wird vermieden, dass der Konsument die Backware an einer überstehenden Umhüllung des Aufsatzes anfasst und dadurch beispielsweise eine Schokoladenumhüllung zum Schmelzen bringt, was zu unerwünschten Verunreinigungen der Finger führen kann. In einer weiteren vorteilhaften Ausgestaltung ist die Umhüllung fettbasiert und enthält bevorzugt Schokolade, Karamell, Zucker, Aromata und/oder Salz.

Besonders vorteilhaft beträgt das Volumenverhältnis und/oder das Gewichtsverhältnis von Kernmasse des Aufsatzes zu ihrer fettbasierten Umhüllung 3-1:1, bevorzugt 2,5-1,5:1, weiter bevorzugt 2,2-1,8:1, noch weiter bevorzugt 2:1.Durch dieses im Vergleich zu gattungsgemäßen umhüllten Kernmassen hohes Verhältnis wird ein besonders intensives von der Kernmasse hervorgerufenes Geschmackserlebnis erzeugt.

Bei der flüssigkeitshaltigen Kernmasse kann es sich bevorzugt um eine Fruchtfüllung handeln, wobei der Fruchtanteil der Fruchtfüllung aus frischen Früchten, Konzentrat und/oder Pulver besteht. Alternativ handelt es sich bei der flüssigkeitshaltigen Kernmasse um Marmelade, wobei der Fruchtanteil der Marmelade aus frischen Früchten, Konzentrat und/oder Pulver besteht. Die Kernmasse kann alternativ aus wenigstens einem fettbasierten- und/oder zuckerbasierten Nahrungsmittel, beispielsweise Karamell, bestehen. Ein gewisser Flüssigkeitsanteil ist nicht nur vorteilhaft sondern auch notwendig um das Gebäck der Backware erfindungsgemäß zu befeuchten. Allerdings darf der Flüssigkeitsanteil in der Kernmasse nicht zu hoch sein, da ansonsten die Gefahr besteht das Gebäck zu stark zu durchnässen, was nachteilig für die Stabilität und/oder die Textur der Backware wäre. Ein zu geringer Flüssigkeitsanteil in der Kernmasse verringert allerdings auch die maximale Verzehrbarkeit der Backware, da diese davon abhängig ist, wann ein Großteil der Flüssigkeit aus der Kernmasse entwichen ist.

Weiterhin kann die Kernmasse gelartig ausgebildet sein und insbesondere einen Hydrokolloidanteil von 0,1 % bis 10 % aufweisen. Weiterhin kann die Ausbildung des gelartigen Hydrokolloidnetzwerkes durch die Einstellung des pH-Werts und/oder durch Hinzugabe von Hilfsstoffen wie Salzen als Einzelzutat oder Premix-System beeinflusst werden, wobei die Ausbildung des gelartigen Hydrokolloidnetzwerkes durch die Unterschreitung einer vorbestimmten Temperatur, abhängig vom Hydrokolloid-Typ, geschieht.

In einer weiteren vorteilhaften Ausgestaltung ist das Gebäck einer erfindungsgemäßen Backware beispielsweise aus einem Biskuit- und/oder dergleichen Massen und Teigen hergestellt. Dabei kann das Gebäck insbesondere eine weiche Konsistenz und eine lockere Struktur, beispielsweise durch eine Krume mit fein- bis grobproiger Struktur, aufweisen. Dadurch ergibt sich beim Verzehr der Backware vorteilhafterweise ein angenehm weiches und leichtes Mundgefühl, im Vergleich zu einem Gebäck, beispielsweise aus Hartkeksteig

In einer Ausgestaltung ist die Umhüllung eines Aufsatzes einer erfindungsgemäßen Backware zumindest teilweise fettbasiert, bindemittellhaltig, gewürzbasiert und/oder zuckerbasiert. Insbesondere kann die Umhüllung schokoladenhaltig, nusshaltig, aromahaltig, salzhaltig und/oder karamellhaltig sein. Durch diese Ausgestaltungen kann vorteilhafterweise ein weites Spektrum an Geschmackserlebnissen beim Verzehr der Backware erzeugt werden.

In einer Ausgestaltung weist die Umhüllung eines Aufsatzes einer erfindungsgemäßen Backware an keinem Punkt eine Wanddicke von mehr als 5 mm auf. Dabei kann insbesondere der Mittelwert der Wanddicke der Umhüllung an der Kontaktfläche zum Gebäck zwischen 0,1 mm und 3,0 mm liegen. Vorteilhaft daran ist, dass eine brüchige Umhüllung entsteht, welche mit den Zähnen und/oder der Zunge aufbrechbar ist, was zu einer charakteristischen Abfolge von Knackgeräuschen führt. Darüber hinaus kann über die Wanddicke der Umhüllung an der Kontaktfläche der Stofftransport zwischen der Kernmasse des Aufsatzes und dem Gebäck eingestellt werden. Zu dem kann die Wanddicke der Teilbereiche der Umhüllung unterschiedlich groß sein.

Eine erfindungsgemäße Backware kann zudem Sollbruchstellen aufweisen. Solche Sollbruchstellen bewirken, dass die Backware leicht und ohne Hilfsmittel in durch die Sollbruchstellen vordefinierte Teilstücke geteilt werden kann, insbesondere ohne dass die Füllung des Aufsatzes unkontrolliert aus der Bruchfläche austritt und die Hände des Konsumenten beschmiert. Die Sollbruchstellen können jeweils auf der Unterseite und/oder Oberseite des Aufsatzes und/oder des Gebäcks angeordnet sein. Die Umhüllung eines Aufsatzes der Backware kann beispielsweise auf der dem Gebäck zugewandten und/oder dem Gebäck abgewandten Seite zumindest eine, vorzugsweise im Wesentlichen gradlinige, Vertiefung und/oder Materialschwächung aufweisen. Die zumindest eine Vertiefung und/oder Materialschwächung kann insbesondere durchgängig, aber auch unterbrochen sein. Eine Materialschwächung kann beispielsweise durch eine Ausdünnung oder eine Anzahl von durchgängigen oder nicht durchgängigen Perforationen der Umhüllung bedingt sein. Werden beispielsweise die durch die Sollbruchstellen definierten Teile des Gebäcks zur als Vertiefung ausgestalteten Sollbruchstelle aufgeschert, kann sich das Gebäck aufgrund des mechanischen Drucks vorwiegend entlang der Vertiefung verformen und schließlich brechen. Ist vorteilhafterweise eine zweite Sollbruchstelle auf der der ersten Sollbruchstelle gegenüberliegenden Seite des Gebäcks mit vorzugsweise im Wesentlichen gleicher Längsausrichtung ausgebildet, so bricht das an dieser Seite aufgescherte Gebäck präferentiell auch hier entlang der zweiten Sollbruchstelle, so dass insgesamt eine glatte, relativ kleinflächige und ansehnliche Bruchkante entsteht.

In einer beispielhaften Ausgestaltung weisen die Komponenten einer erfindungsgemäßen Backware folgende Maße auf: Das Gebäck weist eine maximale Breite sowie eine maximale Länge von 20 mm bis 100 mm auf; der Aufsatz weist eine Höhe von 2 mm bis 10 mm, ein Verhältnis von Volumen zu Oberfläche von 1,8 bis 4,0 und/oder ein Gewicht von 3 g bis 15 g auf und/oder die Backware weist ein Gewicht von 3,1 g bis 25 g auf. Die genannten Maße ergeben für den Verzehr der Backware besonders vorteilhafte sensorische Eigenschaften, sind aber keinesfalls als limitierend anzusehen.

Weiterhin ist eine Einrichtung zur Herstellung eines Aufsatzes für eine erfindungsgemäße Backware vorgesehen. Diese Einrichtung kann eine Gießform, bevorzugt aus Polycarbonat, oder eine andere geeignete Form sein. Diese Form weist eine Bodenfläche sowie Seitenwandungen auf. An der Bodenfläche befinden sich Elemente, welche bei der Herstellung des Aufsatzes an der Kontaktfläche der Umhüllung Durchbrechungen erzeugen. Diese Elemente können als Zacken, Stifte und/oder Dorne ausgestaltet sein. Denkbar ist auch eine Kombination der Varianten, um gegebenenfalls unterschiedliche Durchbrechungen an unterschiedlichen Stellen der Kontaktfläche zu erzeugen, um die Flüssigkeitsdurchlässigkeit bereichsabhängig verändern zu können. Weiterhin ist bevorzugt, dass die Elemente für die Durchbrechungen sowie die Bodenfläche und die Seitenwandungen zumindest teilweise eine fettabweisende Beschichtung aufweisen, um den Aufsatz leichter aus der Form entnehmen zu können. Weiterhin ist es bevorzugt, dass die Elemente beheizt sind, damit die fetthaltige Umhüllung des Aufsatzes nicht vollständig erstarrt, was vor allem im Hinblick auf die Verbindung zwischen Aufsatz und Gebäck vorteilhaft ist, da in einem leicht geschmolzenen Zustand die fetthaltige Umhüllung besser an dem Gebäck haftet.

Weiterhin ist die Verwendung eines und/oder mit einem offenbarten Verfahren hergestellten Aufsatzes zur Haftverbindung von Gebäck und/oder Aufsatz dargestellt. Ein hergestellter Aufsatz ist zumindest im Moment des Aufbringens auf ein Gebäck an diesem haftfähig. Daher ist es insbesondere auch denkbar, einen Aufsatz so zwischen zumindest zwei Gebäcken oder zwischen zumindest einem Gebäck und zumindest einem Überzug anzubringen, dass der Aufsatz an beiden Gebäcken beziehungsweise an Gebäck und Überzug haftet. Als Haftvermittler kommen grundsätzlich alle Rohstoffe der Nahrungsmittelzusammensetzung der Umhüllung und des Gebäcks in Frage. Auf diese Weise erfüllt der Aufsatz in einer zusammengesetzten Backware gleichzeitig die Funktionen eines Geschmacksträgers und eines Haftvermittlers zwischen den Komponenten der Backware. Dadurch ist vorteilhafterweise eine besonders einfache Herstellung zusammengesetzter Backwaren möglich, da das separate Einbringen eines oder mehrerer Haftvermittler entfällt. Des Weiteren entfallen auch mögliche nachteilige Einflüsse von Haftvermittlern auf Geschmack, Konsistenz oder Haltbarkeit der Backware.

Die erfindungsgemäße und/oder mit einem erfindungsgemäßen Verfahren hergestellte Backware kann neben einer runden Grundfläche auch eine rechteckige, ovale oder ringförmige Grundfläche aufweisen. Weiterhin ist es denkbar, dass die Umhüllung des Aufsatzes einer solchen Backware aus verschiedenen Rohstoffmischungen, insbesondere aus verschiedenen Schokoladensorten hergestellt ist. Zudem ist es möglich, dass die Umhüllung mit zumindest einem Schriftzug und/oder zumindest einem Symbol, insbesondere einem Markenzeichen, versehen ist.

Vorteilhafte Ausgestaltungen der Erfindung werden anhand von beispielhaften Zeichnungen in Verbindung mit der nachfolgenden Beschreibung erläutert. Hierbei zeigen:
- Fig. 1: eine schematische Querschnittsansicht einer erfindungsgemäßen Backware;
- Fig. 2: eine mögliche Ausgestaltung einer Einrichtung zur Herstellung einer erfindungsgemäßen Backware;
- Fig. 3: ein Ablaufdiagramm einer ersten Variante eines Herstellungsverfahrens für einen Aufsatz für eine Backware;
- Fig. 4: ein weiteres Ablaufdiagramm einer alternativen Variante eines Herstellungsverfahrens aus Figur 3;
- Fig. 5: ein Ablaufdiagramm einer weiteren alternativen Variante eines erfindungsgemäßen Herstellungsverfahrens für eine erfindungsgemäße Backware;
- Fig. 6: ein weiteres Ablaufdiagramm einer alternativen Variante des in Figur 5 gezeigten Herstellungsverfahrens;
- Fig. 7: zwei schematische Querschnittsansichten unterschiedlicher hergestellter Backwaren;
- Fig. 8: schematische Querschnittsansichten zweier erfindungsgemäßer und/oder in erfindungsgemäßen Verfahren hergestellter Backwaren;
- Fig. 9: schematische Aufsichten verschiedener erfindungsgemäßer und/oder in erfindungsgemäßen Verfahren hergestellter Backwaren und
- Fig. 10: schematische Aufsichten verschiedener erfindungsgemäßer und/oder in erfindungsgemäßen Verfahren hergestellter Backwaren.

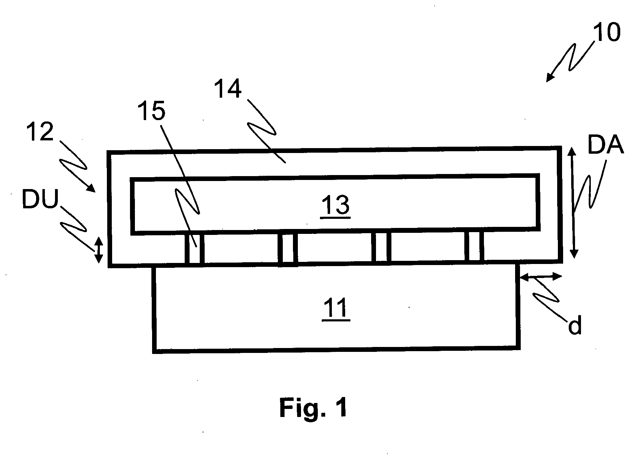

Figur 1a zeigt eine schematische Querschnittsansicht einer erfindungsgemäßen Backware 10. Die Backware 10 besteht in diesem Beispiel aus einem Gebäck 11, beispielsweise aus einer Wiener Masse, und einem Aufsatz 12. Der Aufsatz 12 ist dabei aus wenigsten einer flüssigkeitshaltigen Kernmasse 13, beispielsweise aus Marmelade, und einer Umhüllung 14, beispielsweise aus Schokolade, hergestellt. Wie ersichtlich ist, ist die flüssigkeitshaltige Kernmasse 13 in diesem Beispiel vollständig von der fetthaltigen Umhüllung 14 umgeben. Allerdings sind in der fetthaltigen Umhüllung 14 mehrere Durchbrechungen 15 angeordnet, welche sich bis zu der flüssigkeitshaltigen Kernmasse 13 erstrecken, um einen Flüssigkeitstransport von der flüssigkeitshaltigen Kernmasse 13 zu dem Gebäck 11 zu ermöglichen. Die Wanddicke DU der Umhüllung 14 des Aufsatzes 12 beträgt im dargestellten Beispiel weniger als 1/3 der Dicke DA des Aufsatzes 12, um einen hohen Füllungsanteil zu erreichen. Eine Differenz d der Konturen von Umhüllung 14 und Gebäck 11 in der Ebene ihrer gemeinsamen Kontaktfläche beträgt im Beispiel weniger als 5 mm, damit nur ein kleiner Überstand der Umhüllung entsteht, an dem die Backware 10 durch Stöße beispielsweise während Abfüllung oder Transport beschädigt werden könnte. In dieser Darstellung erstreckt sich ein einziger Aufsatz 12 über das gesamte Gebäck 11 und darüber hinaus. Allerdings ist es ebenfalls möglich, dass Aufsatz 12 und Gebäck 11 bündig aufeinanderliegen, sodass die Differenz d verschwindet, oder dass es sich um mehrere Aufsätze 12 handelt, welche beispielsweise jeweils ringförmig auf dem Gebäck 11 angebracht sind. Weiterhin ist es möglich, dass sich der wenigstens eine Aufsatz 12 nicht über das gesamte Gebäck 11 erstreckt.

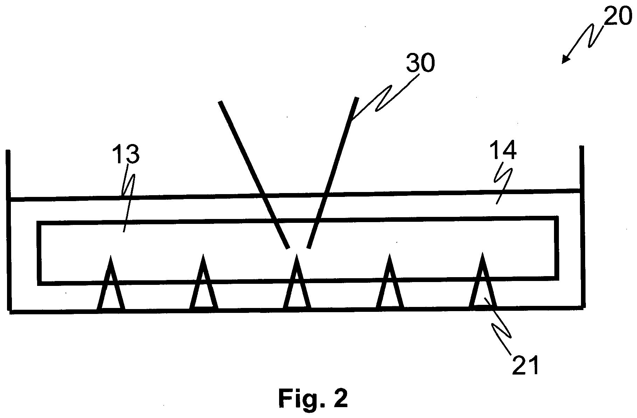

Figur 2 zeigt eine mögliche Ausgestaltung einer Einrichtung 20 zur Herstellung eines Aufsatzes 12. Dabei wird die zumindest teilweise flüssige Umhüllung 14, die beispielsweise aus Schokolade bestehen kann, in die Form 20 gegeben. Weiterhin ist eine Düse 30 zu sehen, mit welcher die Rohstoffmischung der flüssigkeitshaltigen Kernmasse 13, die beispielsweise aus einer gelartigen Fruchtzubereitung bestehen kann, in die Umhüllung 14 injiziert werden kann. Weiterhin weist die Form 20 Elemente 21 auf, welche beispielsweise als Zacken ausgestaltet sein können und Durchbrechungen in der Umhüllung 14 erzeugen.

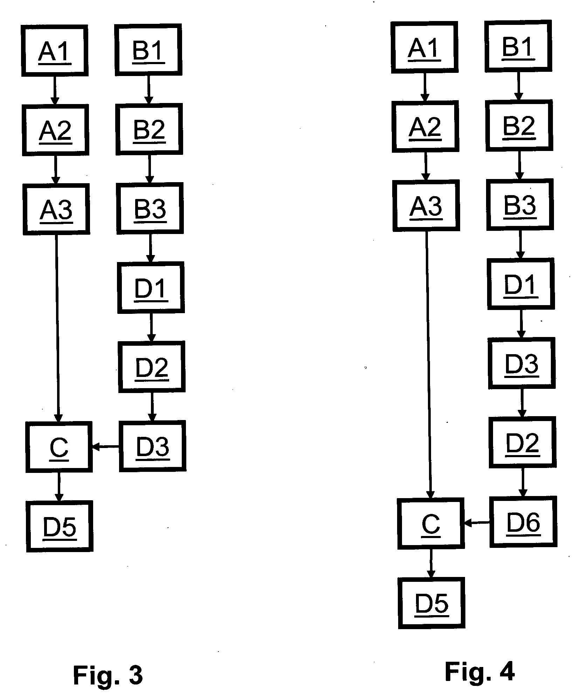

Figur 3 zeigt ein Ablaufdiagramm einer ersten Variante eines Herstellungsverfahrens für einen Aufsatz 12 einer Backware 10. Hierbei beschreiben alle mit A gekennzeichneten Verfahrensschritte die Herstellung der beispielsweise aus Schokolade bestehenden Umhüllung 14 und die mit B gekennzeichneten Verfahrensschritte die Herstellung der flüssigkeitshaltigen Kernmasse 13, die beispielsweise aus einem gelierbaren Fruchtmus besteht. Schritt A1 betrifft das Abmessen der Rohstoffe der Umhüllung, A2 das Vermischen dieser Rohstoffe und A3 das Erhitzen dieser Rohstoffe. Es können erhitzte Rohstoffe im einem temperierten Vorratsbehälter zur Aufnahme der gießfähigen Masse gelagert werden und Hilfsstoffe wie Emulgatoren können vor oder während der Stufe A4 (temperierte Lagerung) zur Einstellung der Materialeigenschaften der Umhüllung wie Viskosität hinzugefügt werden.B1 beschreibt das Abmessen der Rohstoffe der Kernmasse, die beispielsweise in Form einer Hydrokolloidlösung vorgelegt werden, B2 das Vermischen dieser Rohstoffe und B3 das Erhitzen dieser Rohstoffe. Danach wird im Verfahrensschritt D1 der Trockenstoffgehalt der Rohstoffmischung der Kernmasse, beispielsweise durch die Zugabe von Fruchtstücken, eingestellt. Im nächsten Schritt D2 werden die Eigenschaften (z.B. pH-wert) der Kernmasse beispielsweise hinsichtlich Ausbildung eines gelartigen Netzwerkes durch Hinzugabe einer Säure, insbesondere Zitronensäure, eingestellt. Zu dem erfolgt die Zugabe von Aroma, um Geschmack und Geruch der Kernmasse den Anforderungen und Wünschen der Konsumenten gerecht zu werden, anzupassen. Daraufhin werden die Rohstoffe im Schritt D3 gegebenenfalls unter Scherung auf eine Temperatur T1 abgekühlt, wodurch die Füllungsmasse kontrolliert wieder verflüssigt bzw.in der Viskosität erniedrigt wird. In Verfahrensschritt C wird die Rohstoffmischung der Kernmasse in einem One-Shot-Verfahren in die Rohstoffmischung der Umhüllung injiziert. Im letzten Schritt D5 wird der so aus Umhüllung und Kernmasse hergestellte Aufsatz bis auf Raumtemperatur abgekühlt. Dabei muss die Abkühlgeschwindigkeit schnell genug eingestellt werden, um den Produktionsablauf nicht zu verzögern. Andererseits muss die Abkühlung D5 kontrolliert erfolgen, damit durch das gegebenenfalls unterschiedliche thermische Kontraktionsverhalten von Kernmasse und/oder Umhüllung keine Risse und/oder Brüche in der Umhüllung entstehen.

In der Alternative in Figur 4 werden die Verfahrensschritt A1-A3, B1-B3 sowie Schritt C, D1 und D5 in derselben Reihenfolge ausgeführt. Allerdings wird in dieser Variante der Schritt D3 vor D2 ausgeführt. Nach dem Schritt D2, also dem Einstellen des pH-Wertes, folgt nun ein weiterer Schritt D6, bei welchem die Rohstoffe gegebenenfalls unter Scherung auf eine Temperatur T2 abgekühlt werden. Der zusätzliche Schritt D6 dient der Einstellung des Gelierungsprozesses, dessen Ablauf sowohl von dem pH-Wert als auch von der Temperatur und mechanischer Scherung der Rohstoffmischung abhängt. Danach folgen wie auch in der Alternative aus Figur 3 die Schritte C und D5. Die hergestellte Kernmasse kann nach der Ausbildung einer gelartigen Netzwerkstruktur in einem Vorratsbehälter temperiert und bis zur weiteren Verwendung zwischengelagert werden.

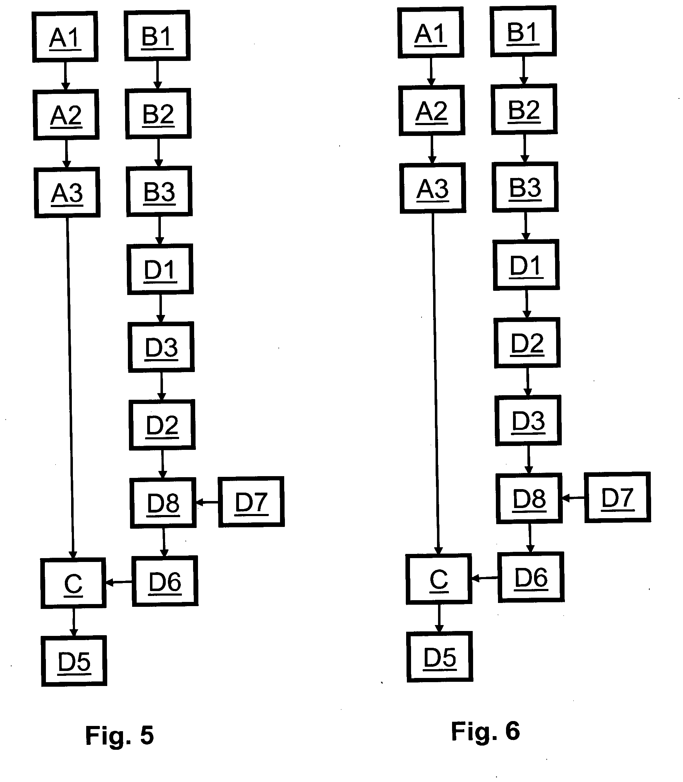

Figur 5 zeigt ein weiteres Ablaufdiagramm eines alternativen Herstellungsverfahrens. Hierbei werden ebenfalls die Schritte A1-A3, B1-B3, C, D5 und D1 in derselben Reihenfolge ausgeführt, wie auch bereits in den vorangegangenen Varianten. Darauf folgen, wie in Figur 4 beschrieben, die Schritte D3 und D2. In dieser Variante werden nun, nach der Einstellung des pH-Wertes in Schritt D2, die Rohstoffe der Kernmasse in einem weiteren Verfahrensschritt D8 mit Hilfsstoffen vermischt, welche zur Fragmentierung des gelartigen Netzwerks in der Kernmasse beitragen und zuvor in einem separaten Verfahrensschritt D7 abgemessen wurden. Bei den Hilfsstoffen kann es sich beispielsweise um Pflanzenfasern handeln, die die Ausbildung eines durchbrochenen Gelnetzwerkes begünstigen. Hierauf folgen wie in der Variante nach Figur 4 die Schritte D6, C und D5.

Figur 6 zeigt eine Alternative zu dem in Figur 5 gezeigten Herstellungsverfahren. In dieser Variante folgt auf den Verfahrensschritt D1 der Schritt D2 und danach D3. Die Reihenfolge der pH-Einstellung D2 und der Abkühlung D3 auf T1 der Rohstoffmischung der Kernmasse wird als gegenüber der in Figur 5 dargestellten Variante vertauscht. Je nach Produktvorgaben kann so der Gelierungsprozess in positiver Weise beeinflusst werden. Alle übrigen Verfahrensschritte werden wie in der in der Figur 5 gezeigten Variante ausgeführt.

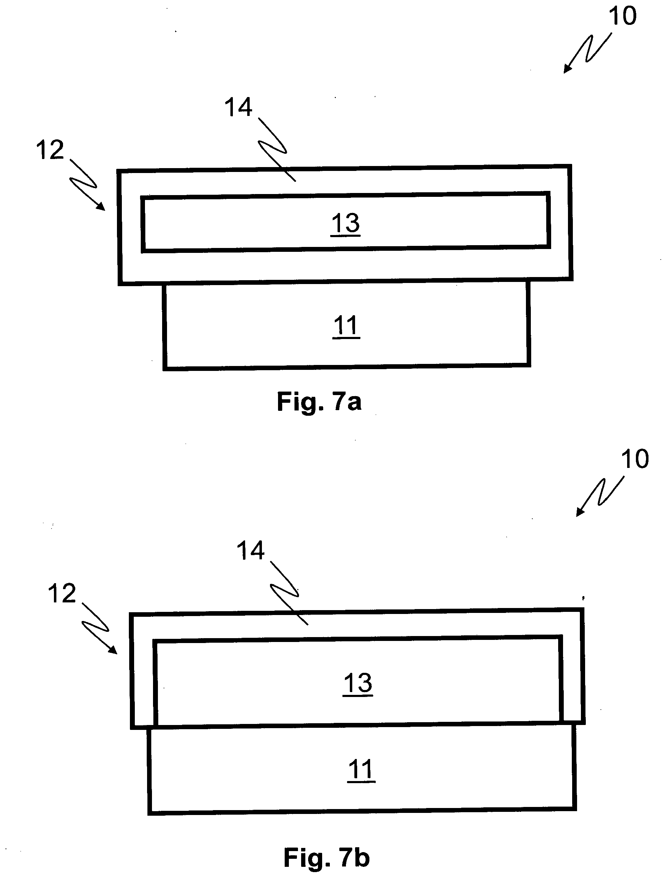

Figur 7a zeigt eine schematische Querschnittsansicht einer mit einem Verfahren (nicht erfindungsgemäß) hergestellten Backware 10. Im Gegensatz zu Figur 1 sind in diesem Vergleichsbeispiel keine Durchbrechungen in der Umhüllung 14 des Aufsatzes 12 angebracht, sodass die flüssigkeitshaltige Kernmasse 13 vollständig von der Umhüllung 14 umschlossen ist.

Figur 7b zeigt eine schematische Querschnittsansicht einer weiteren mit einem Verfahren (nicht erfindungsgemäß) hergestellten Backware 10. Im Gegensatz zu Figur 7a umschließt die Umhüllung 14 den Aufsatzes 12 in diesem Beispiel nicht auf der dem Gebäck 11 zugewandten Seite, sodass ein freier Stofftransport zwischen der flüssigkeitshaltige Kernmasse 13 und dem Gebäck 11 möglich ist. Die Wanddicke der Teilbereiche der Umhüllung können unterschiedliche groß sein.

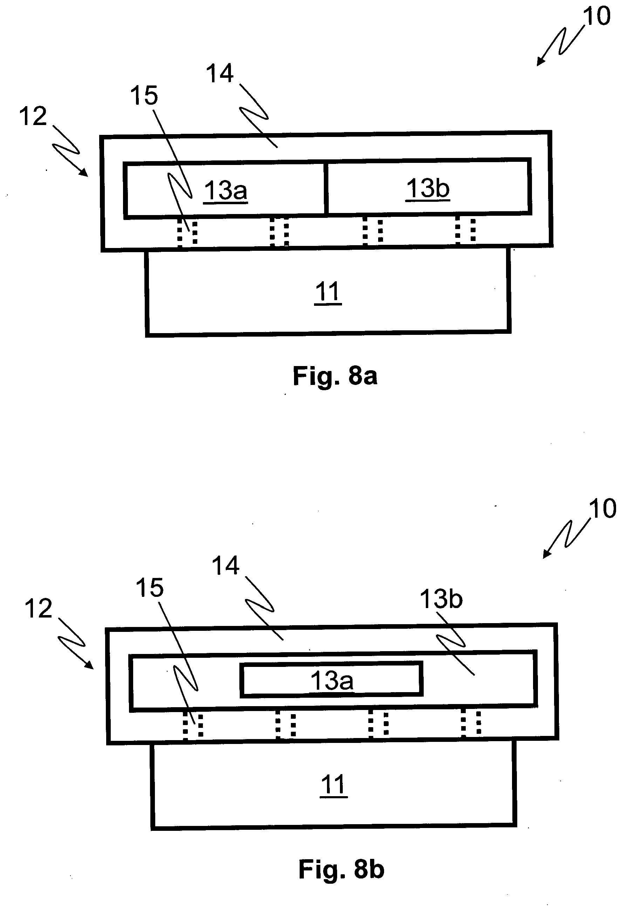

Figur 8 zeigt schematische Querschnittsansichten zweier erfindungsgemäßer und/oder in erfindungsgemäßen Verfahren hergestellter Backwaren 10. In den dargestellten Beispielen enthält der Aufsatz 12 in einer gemeinsamen Umhüllung 14, die Durchbrechungen 15 in der Kontaktfläche zu einem Gebäck 11 enthalten kann, jeweils zwei verschiedene Kernmassen 13a und 13b, die entweder nebeneinander (Figur 8a) oder ineinander (Figur 8b) angeordnet sind. Die in Figur 8b dargestellte Ausgestaltung des Aufsatzes 12 lässt sich vorteilhafterweise in einem Triple-Shot-Verfahren herstellen, bei dem gleichzeitig die Rohstoffmischungen zweier Kernmassen 13a und 13b in die Rohstoffmischung einer Umhüllung 14 injiziert werden. Selbstverständlich sind auch Ausgestaltungen mit mehr als zwei unterschiedlichen Kernmassen 13 denkbar, die nebeneinander, übereinander und/oder ineinander angeordnet sein können.

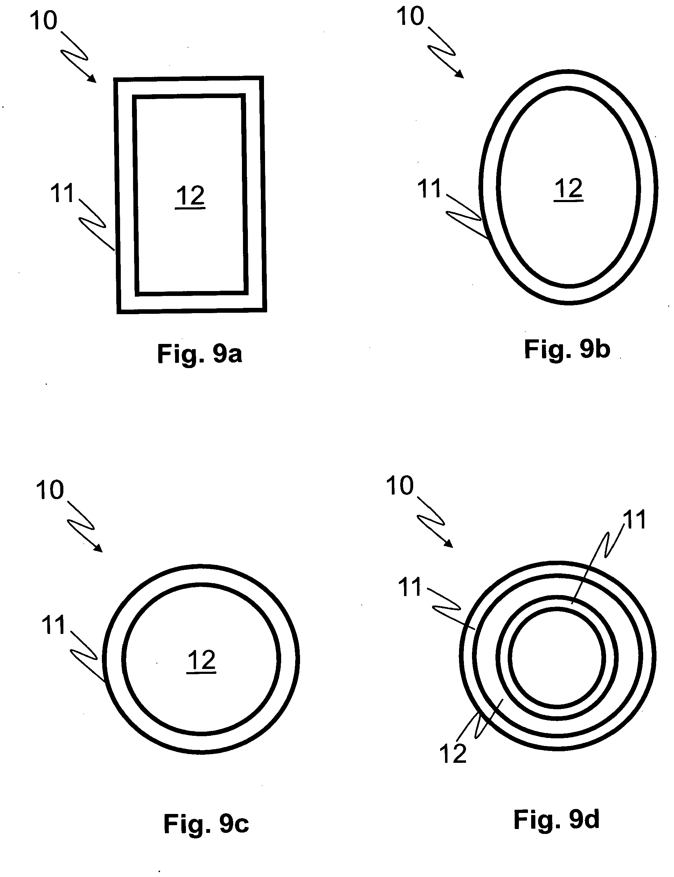

Figur 9 zeigt schematische Aufsichten verschiedener erfindungsgemäßer und/oder in erfindungsgemäßen Verfahren hergestellter Backwaren 10. Die in der Aufsicht sichtbare Projektion von Aufsatz 12 und Gebäck 11 kann beispielsweise rechteckig (Figur 9a), oval (Figur 9b), rund (Figur 9c) oder ringförmig (Figur 9d) sein, ist aber nicht auf diese Formen beschränkt. In den Darstellungen ist die Fläche des Aufsatzes 12 jeweils kleiner als die Fläche des zugehörigen Gebäcks 11 derselben Backware 10. Es ist aber auch denkbar, dass die Fläche eines Aufsatzes 12 genau so groß wie oder größer als die Fläche des zugehörigen Gebäcks 11 ist. Weiterhin kann ein Aufsatz 12 auch eine andere Form aufweisen als das zugehörige Gebäck 11. Außerdem können auch mehrere Aufsätze 12, insbesondere auch mit unterschiedlichen Formen, gemeinsam auf einem Gebäck 11 angebracht sein.

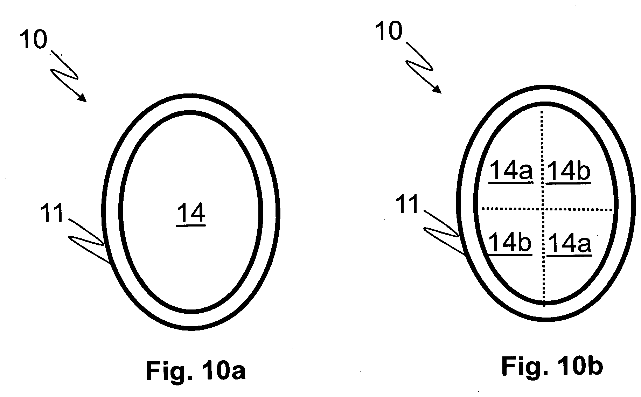

Figur 10 zeigt schematische Aufsichten verschiedener erfindungsgemäßer und/oder in erfindungsgemäßen Verfahren hergestellter Backwaren 10. Die in der Aufsicht sichtbare Projektion von Aufsatz 12 und Gebäck 11 ist in den dargestellten Beispielen ellipsenförmig. Die sichtbare Oberseite der Umhüllung 14 des Aufsatzes 12 kann entweder aus einem einheitlichen Material, beispielsweise Milchschokolade, bestehen (Figur 10a) oder aus zumindest zwei unterschiedlichen Materialien 14a und 14b, beispielsweise weißer Schokolade und dunkler Schokolade, bestehen (Figur 10b). Die unterschiedlichen Materialien können wie in Figur 10b beispielhaft dargestellt als Ellipsensektoren angeordnet sein. Eine andere Anzahl von Sektoren, beispielsweise acht Sektoren, oder andere Anordnungen, beispielsweise als Ellipsenringe, sind aber auch denkbar.

Die anhand der Figuren beschriebenen Merkmalskombinationen sind nur beispielhaft. Im Rahmen der Erfindung sind auch andere beliebige Kombinationen der beschriebenen Merkmale denkbar.

### Bezugszeichenliste

- 10: Backware
- 11: Gebäck
- 12: Aufsatz
- 13: flüssigkeitshaltige Kernmasse
- 14: Umhüllung
- 15: Durchbrechung
- 20: Einrichtung, Form
- 21: Element
- 30: Düse
- DA: Dicke eines Aufsatzes
- DU: Dicke einer Umhüllung
- d: Differenz zweier Konturen

- A1: Abmessen der Rohstoffe der Umhüllung
- A2: Vermischen der Rohstoffe der Umhüllung
- A3: Erhitzen der Rohstoffe der Umhüllung
- B1: Abmessen der Rohstoffe der Kernmasse
- B2: Vermischen der Rohstoffe der Kernmasse
- B3: Erhitzen der Rohstoffe der Kernmasse
- C: Injektion
- D1: Einstellen des Trockenstoffgehalts
- D2: Einstellen des pH-Werts
- D3: Kühlen auf eine Temperatur T1
- D5: Vollständiges Abkühlen
- D6: Kühlen auf eine Temperatur T2
- D7: Abmessen der Hilfsstoffe
- D8: Beimischen der Hilfsstoffe

## Patentansprüche

1. Verfahren zur Herstellung einer Backware (10) aus mindestens einem Gebäck (11) und mindestens einem Aufsatz (12) aus zumindest einer flüssigkeitshaltigen Kernmasse (13) mit zumindest einer für die Flüssigkeit undurchlässigen Umhüllung (14), das zumindest die folgenden Schritte umfasst:
a. Herstellen des mindestens einen Gebäcks (11);
b. Herstellen des mindestens einen Aufsatzes (12) in einem One-Shot-Verfahren, oder einem Triple-Shot-Verfahren, bei dem gleichzeitig die Rohstoffmischungen zwei verschiedener Kernmassen (13a, 13b), welche ineinander angeordnet werden, in die Rohstoffmischung einer gemeinsamen Umhüllung (14) injiziert werden, das zumindest die Injektion (C) einer Rohstoffmischung der zumindest einen flüssigkeitshaltigen Kernmasse (13) des Aufsatzes (12) in eine Rohstoffmischung der zumindest einen Umhüllung (14) des Aufsatzes (12) umfasst, wobei die Umhüllung zumindest am Ende der Herstellung des Aufsatzes (12) nicht fließfähig ist;
c. Ausgestalten von Durchbrechungen (15) in der Kontaktfläche der Umhüllung (14) zum Gebäck (11) nach der Injektion (C) einer Rohstoffmischung der zumindest einen flüssigkeitshaltigen Kernmasse (13) des Aufsatzes (12) in eine Rohstoffmischung der zumindest einen Umhüllung (14) der Aufsatzes (12), und
d. Aufbringen des mindestens einen Aufsatzes (12) auf das mindestens eine Gebäck (11) oder umgekehrt, wobei der Aufsatz (12) im Bereich seiner Kontaktfläche zum Gebäck (11) daran haftfähig ist.

2. Verfahren nach Anspruch 1, wobei das Herstellen des mindestens einen Aufsatzes (12) mindestens einen der folgenden Schritte vor der Injektion (C) einer Rohstoffmischung der zumindest einen flüssigkeitshaltigen Kernmasse (13) des Aufsatzes (12) in eine Rohstoffmischung der zumindest einen Umhüllung (14) des Aufsatzes (12) umfasst:
a. Abmessen (A1) der Rohstoffe der Umhüllung (14);
b. Vermischen (A2) der Rohstoffe der Umhüllung (14) zu einer Rohstoffmischung;
c. Erhitzen (A3) der Rohstoffmischung der Umhüllung (14);
d. Abmessen (B1) der Rohstoffe der Kernmasse (13);
e. Vermischen (B2) der Rohstoffe der Kernmasse (13) zu einer Rohstoffmischung;
f. Erhitzen (B3) der Rohstoffmischung der Kernmasse (13);
g. Einstellen (D1) des Trockenstoffgehalts der Rohstoffmischung der Umhüllung (14) und/oder der Kernmasse (13);
h. Einstellen (D2) des pH-Wertes der Rohstoffmischung der Umhüllung (14) und/oder der Kernmasse (13);
i. Abmessen (D7) und Beimischen (D7) von Hilfsstoffen zur Ausbildung eines Gelnetzwerkes in die Rohstoffmischung der Umhüllung (14) und/oder der Kernmasse (13);
j. Abkühlen (D3) der Rohstoffmischung der Umhüllung (14) und/oder der Kernmasse (13) auf eine 1. Temperatur T1, wobei bevorzugt die 1. Temperatur T1 unterhalb einer Schertemperatur von gelösten Biopolymeren in der jeweiligen Rohstoffmischung liegt und/oder das Abkühlen (D3) nach oder vor dem Einstellen (D2) des pH-Wertes erfolgt;
k. Abkühlen (D6) der Rohstoffmischung der Umhüllung (14) und/oder der Kernmasse (13) auf eine 2. Temperatur T2, wobei bevorzugt die 2. Temperatur T2 unterhalb einer Schertemperatur von gelösten Biopolymeren in der jeweiligen Rohstoffmischung liegt und/oder das Abkühlen (D6) nach dem Einstellen des pH-Wertes (D2) und/oder dem Beimischen (D7) der Hilfsstoffe erfolgt und/oder
l. Aufbrechen einer gelartigen Netzwerkstruktur durch mechanische Behandlung der Rohstoffmischung

3. Verfahren nach Anspruch 1 oder 2, wobei die Herstellung des mindestens einen Aufsatzes (12) nach der Injektion (C) einer Rohstoffmischung der zumindest einen flüssigkeitshaltigen Kernmasse (13) des Aufsatzes (12) in eine Rohstoffmischung der zumindest einen Umhüllung (14) des Aufsatzes (12) ein kontrolliertes Abkühlen (D5) von Schokolade oder Fettglasurmasse der Umhüllung (14) und/oder der Kernmasse (13) auf eine Umgebungstemperatur umfasst.

4. Verfahren nach einem der Ansprüche 1 bis 3,
**dadurch gekennzeichnet, dass**
das Ausgestalten von Durchbrechungen (15) durch herausragende Strukturen (21) in einer Gießform (20) für die Herstellung des Aufsatzes (12) oder nachträglich durch Perforieren der Kontaktfläche, vorzugsweise im zumindest teilweise geschmolzenen Zustand erfolgt.

5. Verfahren nach einem der Ansprüche 1-4,
**dadurch gekennzeichnet, dass** bei der Injektion (C) der Rohstoffmischung der zumindest einen flüssigkeitshaltigen Kernmasse (13) in die Rohstoffmischung der zumindest einen Umhüllung (14):
a. die Viskosität der Rohstoffmischung von Umhüllung (14) und/oder Kernmasse (13) zwischen 1 - 50 Pas, bevorzugt 10-30 Pas, liegt;
b. die Temperatur der Rohstoffmischung der flüssigkeitshaltigen Kernmasse (13) in einem Bereich von +/-3 °C um die Gießtemperatur der Rohstoffmischung der Umhüllung (14) liegt und/oder
c. die Viskosität der Rohstoffmischung der flüssigkeitshaltigen Kernmasse (13), einen Wert maximal 50 % höher oder geringer, vorzugsweise 10-40 % höher oder geringer, als die Viskosität der Rohstoffmischung der Umhüllung (14) hat.

6. Verfahren nach einem der Ansprüche 1-5,
**dadurch gekennzeichnet, dass**
a. das Herstellen des mindestens eines Aufsatzes (12) und das Aufbringen des mindestens einen Aufsatzes (12) auf das mindestens eine Gebäck (11) in einem gemeinsamen Verfahrensschritt erfolgen;
b. das Aufbringen des mindestens einen Aufsatzes (12) auf das mindestens eine Gebäck (11) zumindest teilweise in zumindest eine Vertiefung an der Oberfläche des Gebäcks (11) erfolgt, wobei die zumindest eine Vertiefung bevorzugt eine Tiefe von mindestens 1 mm aufweist und/oder
c. vor dem Aufbringen des mindestens einen Aufsatz (12) auf das mindestens eine Gebäck (11) die Haftfähigkeit des Aufsatzes (12) an dem Gebäck (11), bevorzugt durch Anschmelzen der Umhüllung (14) im Bereich der Kontaktfläche des Aufsatzes (12) zum Gebäck (11) und/oder Aufbringen eines Bindemittels, besonders bevorzugt einer Zuckerlösung, auf zumindest einen Teil der Oberfläche des Gebäcks (11) und/oder der Kontaktfläche, erhöht wird.

7. Verfahren nach einem der Ansprüche 1-6,
**dadurch gekennzeichnet, dass**
die Rohstoffmischung der zumindest einen Kernmasse (13) eine Nahrungsmittelzusammensetzung (1) mit wenigstens folgenden Rohstoffen umfasst:
a. wenigstens ein Lösungsmittel,
b. wenigstens ein Hydrokolloid und
c. bevorzugt wenigstens einen Hilfsstoff für die Gelnetzwerkbildung, wobei der wenigstens eine Hilfsstoff besonders bevorzugt wenigstens eine Pflanzenfaser (49) als Einzelzutat der Nahrungsmittelzusammensetzung (1) umfasst.

8. Verfahren nach Anspruch 7,
**dadurch gekennzeichnet, dass** das wenigstens eine Hydrokolloid und/oder die wenigstens eine Pflanzenfaser (49) in natürlicher, synthetischer und/oder modifizierter Form vorliegen.

9. Verfahren nach Anspruch 7 oder 8,
**dadurch gekennzeichnet, dass** die wenigstens eine Pflanzenfaser (49) als rieselfähiges Pulver, dessen Körnung bevorzugt im Bereich von 0,01 µm bis 5 mm liegt; als Paste und/oder als viskose Lösung bereitgestellt wird.

10. Verfahren nach einem der Ansprüche 7 - 9,
**dadurch gekennzeichnet, dass** die Nahrungsmittelzusammensetzung (1) wenigstens einen der folgenden Rohstoffe umfasst:
a. wenigstens ein Süßungsmittel, bevorzugt einen Sirup oder einen Zucker;
b. wenigstens eine Fruchtflüssigkeit;
c. wenigstens ein Aroma;

11. Verfahren nach einem der Ansprüche 7 bis 10,
**dadurch gekennzeichnet, dass** die Nahrungsmittelzusammensetzung (1) wenigstens einen der folgenden Rohstoffe umfasst:
a. wenigstens ein Stückgut, bevorzugt Fruchtstücke;
b. wenigstens eine Säure und/oder
c. wenigstens ein Salz, insbesondere einen Salzkomplex.

12. Backware (10) mit mindestens einem Gebäck (11) und mindestens einem mit dem mindestens einen Gebäck (11) verbundenen Aufsatz (12), wobei der mindestens eine Aufsatz (12) mindestens eine flüssigkeitshaltige, bevorzugt gelartige, Kernmasse (13) und mindestens eine für die Flüssigkeit der flüssigkeitshaltigen Kernmasse (13) undurchlässige, bevorzugt fettbasierte, Umhüllung (14) der Kernmasse (13) aufweist, **dadurch gekennzeichnet, dass**
die Umhüllung (14) an einer Kontaktfläche zu dem Gebäck (11) eine Anzahl von Durchbrechungen (15) zur kontrollierten Befeuchtung des Gebäcks (11) aus der flüssigkeitshaltigen Kernmasse (13) aufweist.

13. Backware (10) nach Anspruch 12,
**dadurch gekennzeichnet, dass** abgesehen von der Kontaktfläche zu dem mindestens einen Gebäck die mindestens eine flüssigkeitshaltige Kernmasse (13) von allen Seitenflächen der Umhüllung (14) im Wesentlichen flüssigkeitsdicht umschlossen ist.

14. Backware (10) nach einem der Ansprüche 12 oder 13,
**dadurch gekennzeichnet, dass**
das mindestens eine Gebäck (11) und der mindestens eine Aufsatz (12) um höchstens 5 mm, bevorzugt höchstens 2 mm, besonders bevorzugt höchstens 1 mm, voneinander abweichende Konturen in der Ebene ihrer gemeinsamen Kontaktfläche aufweisen.

15. Backware (10) nach einem der Ansprüche 12-14,
**dadurch gekennzeichnet, dass**
das Volumenverhältnis und/oder das Gewichtsverhältnis der mindestens einen Kernmasse (13) zu ihrer Umhüllung (14) 3-1:1, bevorzugt 2,5-1,5:1, weiter bevorzugt 2,2-1,8:1, noch weiter bevorzugt 2:1 beträgt.

16. Backware (10) nach einem der Ansprüche 12-15,
**dadurch gekennzeichnet, dass**
die mindestens eine Kernmasse (13) zumindest teilweise Wasser, Zucker, Fett und/oder eine Gasphase enthält.

17. Backware (10) nach einem der Ansprüche 12-16,
**dadurch gekennzeichnet, dass**
das mindestens ein Gebäck (11) aus einer Wiener Masse, und/oder einem Biskuitteig hergestellt ist, wobei das Gebäck (11) bevorzugt eine weiche Konsistenz und eine lockerere Textur aufweist.

18. Backware (10) nach einem der Ansprüche 12-17,
**dadurch gekennzeichnet, dass** die wenigstens eine Umhüllung (14) zumindest teilweise fettbasiert, gewürzbasiert und/oder zuckerbasiert, und bevorzugt bindemittelhaltig, schokoladenhaltig, nusshaltig, aromahaltig, salzhaltig und/oder karamellhaltig ist.

19. Backware (10) nach einem der Ansprüche 12-18,
**dadurch gekennzeichnet, dass** die wenigstens eine Umhüllung (14)
a. an keinem Punkt eine Dicke von mehr als 5 mm aufweist und/oder
b. auf der dem Gebäck (11) zugewandten und/oder dem Gebäck (11) abgewandten Seite eine Anzahl von Sollbruchstellen aufweist, wobei die Sollbruchstelle bevorzugt als im Wesentlichen gradlinige Vertiefungen und/oder Materialschwächungen ausgebildet sind.

## Claims

1. Method for producing a bakery product (10) from at least one baked base (11) and at least one attachement (12) consisting of at least one liquid-containing core mass (13) with at least one coating (14) impermeable to the liquid,
at least comprising the following steps:
a. producing the at least one baked base (11);
b. producing the at least one attachement (12) in a one-shot process, or a triple-shot process, wherein simultaneously the raw material mixtures of two different core masses (13a, 13b), which are arranged inside one another, are injected into the raw material of a common coating (14), which comprises at least the injection (C) of a raw material mixture of the at least one liquid-containing core mass (13) of the attachement (12) into a raw material mixture of the at least one coating (14) of the attachement (12), wherein the coating is not free-flowing at least at the end of the production of the attachement (12);
c. forming holes (15) in the contact surface of the coating (14) with the baked base (11) after the injection (C) of a raw material mixture of the at least one liquid-containing core mass (13) of the attachement (12) into a raw material mixture of the at least one coating (14) of the attachement (12), and
d. applying the at least one attachement (12) to the at least one baked base (11) or vice versa, wherein the attachement (12) is capable of adhering to the baked base (11) in the region of its contact surface therewith.

2. Method according to claim 1, wherein the production of the at least one attachement (12) comprises at least one of the following steps before the injection (C) of a raw material mixture of the at least one liquid-containing core mass (13) of the attachement (12) into a raw material mixture of the at least one coating (14) of the attachement (12);
a. measuring out (A1) the raw materials of the coating (14);
b. mixing (A2) the raw materials of the coating (14) to form a raw material mixture;
c. heating (A3) the raw material mixture of the coating (14);
d. measuring out (B1) the raw materials of the core mass (13);
e. mixing (B2) the raw materials of the core mass (13) to form a raw material mixture;
f. heating (B3) the raw material mixture of the core mass (13);
g. setting (D1) the dry material content of the raw material mixture of the coating (14) and/or the core mass (13);
h. setting (D2) the pH value of the raw material mixture of the coating (14) and/or the core mass (13);
i. measuring out (D7) and adding (D7) adjuvants for forming a gel network into the raw material mixture of the coating (14) and/or the core mass (13);
j. cooling (D3) the raw material mixture of the coating (14) and/or the core mass (13) to a first temperature T1, wherein the first temperature T1 is preferably below a shear temperature of dissolved biopolymers in the respective raw material mixture and/or the cooling (D3) takes place after or before the setting (D2) of the pH value;
k. cooling (D6) the raw material mixture of the coating (14) and/or the core mass (13) to a second temperature T2, wherein the second temperature T2 is preferably below a shear temperature of dissolved biopolymers in the respective raw material mixture and/or the cooling (D6) takes place after the setting of the pH value (D2) and/or the addition (D7) of the adjuvants, and/or
l. breaking up a gel-like network by mechanical treatment of the raw material mixture.

3. Method according to claim 1 or 2,
wherein
the production of the at least one attachement (12) after the injection (C) of a raw material mixture of the at least one liquid-containing core mass (13) of the attachement (12) into a raw material mixture of the at least one coating (14) of the attachement (12) comprises a controlled cooling (D5) of chocolate or fat glaze mass of the coating (14) and/or the core mass (13) to an ambient temperature.

4. Method according to one of claims 1 to 3,
**characterised in that**
the formation of holes (15) takes place through projecting structures (21) in a mould (20) for producing the attachement (12) or retrospectively by perforating the contact surface, preferably in the at least partially molten state.

5. Method according to one of claims 1 to 4,
**characterised in that**
during the injection (C) of the raw material mixture of the at least one liquid-containing core mass (13) into the raw material mixture of the at least one coating (14):
a. the viscosity of the raw material mixture of the coating (14) and/or core mass (13) is between 1 - 50 Pas, preferably 10 - 30 Pas;
b. the temperature of the raw material mixture of the liquid-containing core mass (13) is in a range of +/-3 °C around the casting temperature of the raw material mixture of the coating (14) and/or
c. the viscosity of the raw material mixture of the liquid-containing core mass (13) has a value at most 50 % higher or lower, preferably 10 - 40 % higher or lower, than the viscosity of the raw material mixture of the coating (14).

6. Method according to one of claims 1 to 5,
**characterised in that**
a. the production of the at least one attachement (12) and the application of the at least one attachement (12) to the at least one baked base (11) take place in one common method step;
b. the application of the at least one attachement (12) to the at least one baked base (11) takes place at least partially into at least one depression on the surface of the baked base (11), wherein the at least one depression preferably has a depth of at least 1 mm and/or
c. before the application of the at least one attachement (12) to the at least one baked base (11) the adhesion of the attachement (12) to the baked base (11) is increased, preferably by surface-fusing of the coating (14) in the region of the contact surface of the attachement (12) with the baked base (11) and/or application of a binding agent, particularly preferably a sugar solution, to at least a part of the surface of the baked base (11) and/or the contact surface.

7. Method according to one of claims 1 to 6,
**characterised in that**
the raw materiam mixture of the at least one core mass (13) comprises a food composition (1) with at least the following raw materials:
a. at least one solvent,
b. at least one hydrocolloid and
c. preferably at least one adjuvant for the gel network formation, wherein the at least one adjuvant particularly preferably comprises at least one plant fibre (49) as an individual ingredient of the food composition (1).

8. Method according to claim 7,
**characterised in that**
the at least one hydrocolloid and/or the at least one plant fibre (49) are present in natural, synthetic and/or modified form.

9. Method according to claim 7 or 8,
**characterised in that**
the at least one plant fibre (49) is provided as a free-flowing powder, of which the particle size is preferably in the range from 0.01 µm to 5 mm, as a paste and/or as a viscous solution.

10. Method according to one of claims 7 to 9,
**characterised in that**
the food composition (1) comprises at least one of the following raw materials:
a. at least one sweetening agent, preferably a syrup or a sugar;
b. at least one fruit fluid;
c. at least one flavouring.

11. Method according to one of claims 7 to 10,
**characterised in that**
the food composition (1) comprises at least one of the following raw materials:
a. at least one ingredient in pieces, preferably pieces of fruit;
b. at least one acid and/or
c. at least one salt, in particular a salt complex.

12. Baked product (10) having at least one baked base (11) and at least one attachement (12) joined to the at least one baked base (11), wherein the at least one attachement (12) has at least one liquid-containing, preferably gel-like, core mass (13) and at least one coating (14) of the core mass (13) which is impermeable to the liquid of the liquid-containing core mass (13) and is preferably fat-based,
**characterised in that**
the coating (14) on a contact surface with the baked base (11) has a number of holes (15) for controlled moistening of the baked base (11) from the liquid-containing core mass (13).

13. Baked product (10) according to claim 12,
**characterised in that**
apart from the contact surface with the at least one baked base the at least one liquid-containing core mass (13) is surrounded in a substantially liquid-tight manner by all side surfaces of the coating (14).

14. Baked product (10) according to one of claims 12 or 13,
**characterised in that**
the at least one baked base (11) and the at least one attachement (12) have contours which deviate from one another by at most 5 mm, preferably at most 2 mm, particularly preferably at most 1 mm, in the plane of their common contact surface.

15. Baked product (10) according to one of claims 12 to 14,
**characterised in that**
the volume ratio and/or the weight ratio of the at least one core mass (13) to their coating (14) is 3-1:1, preferably 2.5-1.5:1, more preferably 2.2-1,8:1, particularly preferably 2:1.

16. Baked product (10) according to one of claims 12 to 15,
**characterised in that**
the at least one core mass (13) at least to some extent contains water, sugar, fat and/or a gas phase.

17. Baked product (10) according to one of claims 12 to 16,
**characterised in that**
the at least one baked base (11) is produced from a genoise, and/or a sponge cake mixture, wherein the baked base (11) preferably has a soft consistency and a looser texture.

18. Baked product (10) according to one of claims 12 to 17,
**characterised in that**
the at least one coating (14) is at least partially fat-based, spice-based and/or sugar-based, and preferably contains binder, chocolate, nuts, flavouring, salt and or caramel.

19. Baked product (10) according to one of claims 12 to 18,
**characterised in that**
the at least one coating (14)
a. at no point has a thickness of more than 5 mm and/or
b. has, on the side facing the baked base (11) and/or facing away from the baked base (11), a number of predetermined breaking points, wherein the predetermined breaking points are preferably designed as substantially straight depressions and/or material weak points.

## Revendications

1. Procédé destiné à fabriquer un produit de boulangerie (10) à partir d'au moins une pâtisserie (11) et d'au moins une décoration (12) constituée par au moins une masse centrale (13) contenant un liquide avec au moins un enrobage (14) imperméable pour le liquide, qui comprend au moins les étapes suivantes :
a. fabrication de la au moins une pâtisserie (11) ;
b. fabrication de la au moins une décoration (12) dans un procédé en un seul coup, ou un procédé en trois coups, par lequel les mélanges de matières de deux masses centrales (13a, 13b) différentes, lesquelles sont agencées l'une dans l'autre, sont simultanément injectés dans le mélange de matières d'un enrobage (14) commun, qui comprend au moins l'injection (C) d'un mélange de matières de la au moins une masse centrale (13) contenant un liquide de la décoration (12) jusque dans un mélange de matières du au moins un enrobage (14) de la décoration (12), dans lequel l'enrobage ne peut pas s'écouler au moins à la fin de la fabrication de la décoration (12) ;
c. arrangement de percements (15) dans la surface de contact de l'enrobage (14) avec la pâtisserie (11) après l'injection (C) d'un mélange de matières de la au moins une masse centrale (13) contenant un liquide de la décoration (12) jusque dans un mélange de matières du au moins un enrobage (14) de la décoration (12), et
d. application de la au moins une décoration (12) sur la au moins une pâtisserie (11) ou inversement, dans lequel la décoration (12) est en mesure d'adhérer à la pâtisserie (11) dans la région de sa surface de contact avec celle-ci.

2. Procédé selon la revendication 1, dans lequel la fabrication de la au moins une décoration (12) comprend au moins une des étapes suivantes avant l'injection (C) d'un mélange de matières de la au moins une masse centrale (13) contenant un liquide de la décoration (12) jusque dans un mélange de matières du au moins un enrobage (14) de la décoration (12) :
a. dosage (A1) des matières de l'enrobage (14) ;
b. mélange (A2) des matières de l'enrobage (14) jusqu'à obtenir un mélange de matières ;
c. chauffage (A3) du mélange de matières de l'enrobage (14) ;
d. dosage (B1) des matières de la masse centrale (13) ;
e. mélange (B2) des matières de la masse centrale (13) jusqu'à obtenir un mélange de matières ;
f. chauffage (B3) du mélange de matières de la masse centrale (13) ;
g. ajustement (D1) de la teneur en matière sèche du mélange de matières de l'enrobage (14) et/ou de la masse centrale (13) ;
h. ajustement (D2) du pH du mélange de matières de l'enrobage (14) et/ou de la masse centrale (13) ;
i. dosage (D7) et incorporation (D7) d'additifs pour la formation d'un réseau gélifié dans le mélange de matières de l'enrobage (14) et/ou de la masse centrale (13) ;
j. refroidissement (D3) du mélange de matières de l'enrobage (14) et/ou de la masse centrale (13) jusqu'à une 1^{re} température T1, dans lequel de préférence la 1^{re} température T1 se situe en dessous d'une température de cisaillement de biopolymères dissous dans le mélange de matières respectif et/ou le refroidissement (D3) s'effectue après ou avant l'ajustement (D2) du pH ;
k. refroidissement (D6) du mélange de matières de l'enrobage (14) et/ou de la masse centrale (13) jusqu'à une 2^{e} température T2, dans lequel de préférence la 2^{e} température T2 se situe en dessous d'une température de cisaillement de biopolymères dissous dans le mélange de matières respectif et/ou le refroidissement (D6) s'effectue après l'ajustement du pH (D2) et/ou l'incorporation (D7) des additifs et/ou
l. fracturation d'une structure réticulaire gélatineuse par traitement mécanique du mélange de matières.

3. Procédé selon la revendication 1 ou 2, dans lequel la fabrication de la au moins une décoration (12) comprend, après l'injection (C) d'un mélange de matières de la au moins une masse centrale (13) contenant un liquide de la décoration (12) jusque dans un mélange de matières du au moins un enrobage (14) de la décoration (12), un refroidissement (D5) contrôlé de chocolat ou de masse de glaçage gras de l'enrobage (14) et/ou de la masse centrale (13) jusqu'à une température ambiante.

4. Procédé selon l'une des revendications 1 à 3,
**caractérisé en ce que**
l'arrangement de percements (15) s'effectue par des structures (21) en saillie dans un moule (20) pour la fabrication de la décoration (12) ou ultérieurement par perforation de la surface de contact, de préférence dans l'état au moins partiellement fondu.

5. Procédé selon l'une des revendications 1 à 4,
**caractérisé en ce que** lors de l'injection (C) du mélange de matières de la au moins une masse centrale (13) contenant un liquide jusque dans le mélange de matières du au moins un enrobage (14) :
a. la viscosité du mélange de matières de l'enrobage (14) et/ou de la masse centrale (13) se situe entre 1-50 Pa·s, de préférence 10-30 Pa·s ;
b. la température du mélange de matières de la masse centrale (13) contenant un liquide se situe dans une plage de +/- 3 °C autour de la température de coulée du mélange de matières de l'enrobage (14) et/ou
c. la viscosité du mélange de matières de la masse centrale (13) contenant un liquide présente une valeur maximale supérieure ou inférieure de 50 %, de préférence supérieure ou inférieure de 10-40 %, à la viscosité du mélange de matières de l'enrobage (14).

6. Procédé selon l'une des revendications 1 à 5,
**caractérisé en ce que**
a. la fabrication de la au moins une décoration (12) et l'application de la au moins une décoration (12) sur la au moins une pâtisserie (11) s'effectuent dans une étape de procédé commune ;
b. l'application de la au moins une décoration (12) sur la au moins une pâtisserie (11) s'effectue au moins partiellement dans au moins un renfoncement à la surface de la pâtisserie (11), dans lequel le au moins un renfoncement présente de préférence une profondeur d'au moins 1 mm et/ou
c. avant l'application de la au moins une décoration (12) sur la au moins une pâtisserie (11), l'adhésivité de la décoration (12) contre la pâtisserie (11) est augmentée de préférence par la fonte de l'enrobage (14) dans la région de la surface de contact de la décoration (12) avec la pâtisserie (11) et/ou l'application d'un liant, particulièrement de préférence d'une solution de sucre, sur au moins une partie de la surface de la pâtisserie (11) et/ou de la surface de contact.

7. Procédé selon l'une des revendications 1 à 6,
**caractérisé en ce que**
le mélange de matières de la au moins une masse centrale (13) comprend une composition alimentaire (1) avec au moins les matières suivantes :
a. au moins un solvant,
b. au moins un hydrocolloïde et
c. de préférence au moins un additif pour la formation d'un réseau gélifié, dans lequel le au moins un additif comprend particulièrement de préférence au moins une fibre végétale (49) en tant qu'ingrédient unique de la composition alimentaire (1).

8. Procédé selon la revendication 7,
**caractérisé en ce que** le au moins un hydrocolloïde et/ou la au moins une fibre végétale (49) se présentent sous forme naturelle, synthétique et/ou modifiée.

9. Procédé selon la revendication 7 ou 8,
**caractérisé en ce que** la au moins une fibre végétale (49) est mise à disposition en tant que poudre pouvant s'écouler dont la granulométrie se situe de préférence dans la plage de 0,01 µm à 5 mm ; en tant que pâte et/ou en tant que solution visqueuse.

10. Procédé selon l'une des revendications 7 à 9,
**caractérisé en ce que** la composition alimentaire (1) comprend au moins une des matières suivantes :
a. au moins un édulcorant, de préférence un sirop ou un sucre ;
b. au moins un liquide de fruit ;
c. au moins un arôme.

11. Procédé selon l'une des revendications 7 à 10,
**caractérisé en ce que** la composition alimentaire (1) comprend au moins une des matières suivantes :
a. au moins un produit sous forme de morceau, de préférence des morceaux de fruit ;
b. au moins un acide et/ou
c. au moins un sel, en particulier un complexe de sel.

12. Produit de boulangerie (10) avec au moins une pâtisserie (11) et au moins une décoration (12) reliée à la au moins une pâtisserie (11), dans lequel la au moins une décoration (12) présente au moins une masse centrale (13) contenant un liquide et de préférence de type gélifié et au moins un enrobage (14) de la masse centrale (13), imperméable au liquide de la masse centrale (13) contenant un liquide et de préférence à base de matière grasse,
**caractérisé en ce que**
l'enrobage (14) présente, contre une surface de contact avec la pâtisserie (11) un certain nombre de percements (15) pour un humectage contrôlé de la pâtisserie (11) depuis la masse centrale (13) contenant un liquide.

13. Produit de boulangerie (10) selon la revendication 12,
**caractérisé en ce que**, à l'exception de la surface de contact avec la au moins une pâtisserie, la au moins une masse centrale (13) contenant un liquide est entourée de façon essentiellement étanche aux liquides de toutes les surfaces latérales de l'enrobage (14).

14. Produit de boulangerie (10) selon l'une des revendications 12 ou 13,
**caractérisé en ce que**
la au moins une pâtisserie (11) et la au moins une décoration (12) présentent des contours s'écartant les uns des autres d'au plus 5 mm, de préférence d'au plus 2 mm, particulièrement de préférence d'au plus 1 mm, dans le plan de leur surface de contact commune.

15. Produit de boulangerie (10) selon l'une des revendications 12 à 14,
**caractérisé en ce que**
le rapport volumique et/ou le rapport pondéral de la au moins une masse centrale (13) par rapport à son enrobage (14) s'élève à 3-1/1, de préférence à 2,5-1,5/1, davantage de préférence à 2,2-1,8/1, davantage de préférence encore à 2/1.

16. Produit de boulangerie (10) selon l'une des revendications 12 à 15,
**caractérisé en ce que**
la au moins une masse centrale (13) contient au moins partiellement de l'eau, du sucre, de la matière grasse et/ou une phase gazeuse.

17. Produit de boulangerie (10) selon l'une des revendications 12 à 16,
**caractérisé en ce que**
la au moins une pâtisserie (11) est fabriquée dans une génoise et/ou une pâte à biscuit, dans lequel la pâtisserie (11) présente de préférence une consistance molle et une texture souple.

18. Produit de boulangerie (10) selon l'une des revendications 12 à 17,
**caractérisé en ce que** le au moins un enrobage (14) est au moins partiellement à base de matière grasse, à base de condiment et/ou à base de sucre, et de préférence contenant des liants, contenant du chocolat, contenant des noix, contenant des arômes, contenant du sel et/ou contenant du caramel.

19. Produit de boulangerie (10) selon l'une des revendications 12 à 18,
**caractérisé en ce que** le au moins un enrobage (14)
a. en aucun point ne présente une épaisseur supérieure à 5 mm et/ou
b. sur le côté tourné vers la pâtisserie (11) et/ou opposé à la pâtisserie (11) présente un certain nombre de points de rupture, dans lequel les points de rupture sont de préférence conçus en tant que renfoncements et/ou affaiblissements de matière essentiellement rectilignes.
